(19) **Europäisches Patentamt / European Patent Office / Office européen des brevets**

(11) **EP 3 439 872 B1**

(12) **EUROPEAN PATENT SPECIFICATION**

(45) Date of publication and mention
of the grant of the patent:
**05.11.2025 Bulletin 2025/45**

(21) Application number: **17714998.6**

(22) Date of filing: **21.03.2017**

(51) International Patent Classification (IPC):
**B60K 35/65** (2024.01)   **B60K 35/60** (2024.01)
**B60K 35/23** (2024.01)   **B32B 17/10** (2006.01)

(52) Cooperative Patent Classification (CPC):
**B32B 17/10036; B32B 17/10559; B32B 17/10568; B32B 17/10761; B32B 17/1077; B32B 17/10788; B60K 35/23; B60K 35/60; B60K 35/654;** B32B 2250/03; B60K 2360/334; B60K 2360/77

(86) International application number:
**PCT/US2017/023298**

(87) International publication number:
**WO 2017/176452 (12.10.2017 Gazette 2017/41)**

(54) **INTERLAYERS HAVING ENHANCED OPTICAL PERFORMANCE**

ZWISCHENSCHICHTEN MIT VERBESSERTEN OPTISCHEN EIGENSCHAFTEN

COUCHES INTERMÉDIAIRES PRÉSENTANT DES PROPRIÉTÉS OPTIQUES AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2016 US 201662318128 P**
           **23.02.2017 US 201715440263**

(43) Date of publication of application:
**13.02.2019 Bulletin 2019/07**

(73) Proprietor: **Solutia Inc.**
**St. Louis, Missouri 63141 (US)**

(72) Inventors:
• **SPANGLER, Lora Lee**
**Belchertown**
**MA 01007 (US)**

• **HURLBUT, Jeffrey B.**
**West Springfield**
**MA 01089 (US)**

(74) Representative: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(56) References cited:
WO-A1-2009/071135    WO-A1-2015/086234
WO-A1-2016/094239    DE-A1- 102007 059 323
DE-A1- 102013 012 648    DE-A1- 19 535 053
US-A1- 2008 075 923

# EP 3 439 872 B1

**Description**

**BACKGROUND**

**1. Field of the Invention**

This disclosure relates to polymeric interlayers and multiple layer panels, such as windshields, made with polymeric interlayers.

**2. Description of Related Art**

The term "safety glass" generally refers to a transparent laminate that includes at least one polymer sheet, or interlayer, disposed between two sheets of glass. Safety glass is often used as a transparent barrier in architectural and automotive applications, and one of its primary functions is to absorb energy resulting from an impact without allowing penetration of an object through the glass. If the force of the impact is sufficient to break the glass, the glass remains bonded to the polymeric interlayer, thereby preventing dispersion of sharp glass shards that could cause damage and injury. Safety glass may also provide other benefits, such as a reduction in passage of ultraviolet (UV) and/or infrared (IR) radiation, and it may also enhance the aesthetic appearance of window openings through addition of color, texture, and the like. Additionally, safety glass with desirable acoustic properties has also been produced, which results in quieter internal spaces.

Laminated safety glass has been used in vehicles equipped with head-up display (HUD) systems. HUD systems project an image of an instrument cluster or other important information to a location on the windshield at the eye level of the vehicle operator. Such a display allows the driver to stay focused on the upcoming path of travel while visually accessing dashboard information. When projected onto a flat windshield having uniform thickness, an interfering reflected double, or "ghost," image is created due to the differences in the position of the projected image as it is reflected off the inside and outside surfaces of each of the glass panels.

One method used to minimize these ghost images has been to apply a coating, such as a dielectric coating, on one of the surfaces of the windshield between the glass and the polymeric interlayer. The coating is designed to produce a third ghost image at a location very close to the primary image, while significantly reducing the brightness of the secondary image, so that the secondary image appears to blend into the background. Unfortunately, at times, the effectiveness of such coatings is limited and the coating itself may interfere with the adhesion of the polymeric interlayer to the glass substrates. This can result in optical distortion, as well as other performance issues.

Another method of reducing ghost images in windshields has been to orient the inner and outer glass panels at an angle from one another. This aligns the position of the reflected images to a single point, thereby creating a single image. Typically, this is done by displacing the outer panel relative to the inner panel by employing a wedge-shaped, or "tapered," interlayer that includes at least one region of nonuniform thickness. Most conventional tapered interlayers include a constant wedge angle over the entire HUD region, although some interlayers have recently been developed that include multiple wedge angles over the HUD region.

WO 2009/071135 discloses a curved vehicle windshield made from laminated glass, whose outer and inner surfaces form a wedge angle with each other for prevention or for reduction of interfering double images at least in preferred regions. DE 10 2007 059323 discloses a windscreen having an outer glass surface and an inner glass surface curved in an area of a head-up-display (HUD) field of vision in a vertical direction such that distance between the surfaces at an upper edge of a HUD vision window is larger than distance between the surfaces at a lower edge of the window. WO 2015/086234 discloses a thermoplastic film for a laminated-glass pane having a non-linear continuous wedge insert in the vertical direction in some sections; in the vertical direction, the laminated-glass pane is further from an observer at a lower end than at an upper end from the perspective of the observer.

The problem with conventional tapered interlayers is that the wedge angle required to minimize the appearance of ghost depends on a variety of factors, including the specifics of the windshield installation, the projection system design and set up, and the position of the user. Many conventional tapered interlayers are designed and optimized for a single set of conditions unique to a given vehicle. Further, the set of optimization conditions usually includes an assumed driver position, including driver height, distance of the driver from windshield, and the angle at which driver views the projected image. While a driver of the height at which the windshield was optimized may experience little or no reflected double images, drivers taller and shorter than that height may experience significant ghost imaging.

Thus, a need exists for polymeric interlayers and windshields utilizing such interlayers that are suitable for use with HUD projection systems, and for which double image separation is reduced for drivers of all heights.

## SUMMARY

One embodiment of the present invention relates to a windshield as defined in claim 1. The windshield comprises:

a pair of glazing panels; and
a polymeric interlayer disposed between and in contact with each of the glazing panels, wherein said polymeric interlayer defines a HUD region, and wherein said HUD region has a tapered vertical thickness profile including at least one variable angle zone,
wherein said windshield exhibits at least one of an upper eyebox reflected double image separation distance of less than 0.58 mrad (2 arc-min) and a lower eyebox reflected double image separation distance of less than 0.58 mrad (2 arc-min) when measured as installed in the vehicle,
wherein the upper eyebox reflected double image separation distance refers to the double image separation distance determined with a camera which camera lens centerline is positioned at a height of 182.4 mm from a line drawn horizontally from the lower most point on the interior of the windshield as installed in the vehicle,
wherein the lower eyebox reflected double image separation distance refers to the double image separation distance determined with a camera which camera lens centerline is positioned at a height of 126.2 mm from a line drawn horizontally from the lower most point on the interior of the windshield as installed in the vehicle.

Another embodiment of the present invention relates to a method of producing the windshield of the present invention. The method comprises:

(a) obtaining a prescribed vertical wedge angle profile for a HUD region of a target interlayer;
(b) forming an interlayer to provide a formed interlayer, wherein said formed interlayer defines a HUD region, and wherein said forming is carried out such that at least 50 percent of said HUD region of said formed interlayer has a vertical wedge angle profile that varies from said prescribed vertical wedge angle profile for said HUD region of said target interlayer by no more than 0.10 mrad, wherein the wedge angle profile is determined by using the Savitzky-Golay method over a 76.2 mm (3-inch) segment using a first order polynominal fit as described in the description; and
(c) laminating said formed interlayer between a pair of glazing panels to form said windshield.

Also disclosed herein is a method of producing an interlayer, or a windshield comprising said interlayer, said method comprising: (a) obtaining a prescribed vertical wedge angle profile for a HUD region of a target interlayer; and (b) forming an interlayer to provide a formed interlayer, wherein said formed interlayer defines a HUD region, and wherein said forming is carried out such that at least 50 percent of said HUD region of said formed interlayer has a vertical wedge angle profile that varies from said prescribed vertical wedge angle profile for said HUD region of said target interlayer by no more than 0.10 mrad.

## BRIEF DESCRIPTION OF THE DRAWINGS

Various embodiments of the present invention are described in detail below with reference to the attached drawing Figures, wherein:

FIG. 1 is a partial side view of a vehicle that includes a head-up display (HUD) system;
FIG. 2a is an exploded view of a windshield including an interlayer having a HUD region;
FIG. 2b is a partial cross-sectional view of the windshield depicted in FIG. 2a, taken along line A-A';
FIG. 3 is a cross-sectional view of a tapered interlayer configured in accordance with one embodiment of the present invention, where various features of the tapered interlayer are labeled for ease of reference;
FIG. 4 is a graphical depiction of wedge angle as a function of position in the HUD region for several tapered interlayers according to various embodiments of the present invention;
FIG. 5 is a cross-sectional view of a tapered interlayer having a tapered zone that extends over the entire width of the interlayer, where the entire tapered zone has a constant wedge angle and a linear thickness profile;
FIG. 6 is a cross-sectional view of a tapered interlayer having a tapered zone that extends over part of the width of the interlayer and a flat edge zone that extends over part of the width of the interlayer, where the tapered zone includes a constant angle zone and a variable angle zone;
FIG. 7 is a cross-sectional view of a tapered interlayer having a tapered zone that extends over part of the width of the interlayer and two flat edge zones that extend over part of the width of the interlayer, where the tapered zone includes a constant angle zone and two variable angle zones;
FIG. 8 is a cross-sectional view of a tapered interlayer having a tapered zone that extends over part of the width of the interlayer and two flat edge zones that extend over part of the width of the interlayer, where the tapered zone is formed entirely of variable angle zones having a curved thickness profile;

FIG. 9 is a cross-sectional view of a tapered interlayer having a tapered zone that extends over the entire width of the interlayer, where the tapered includes three constant angle zones spaced apart from one another by two variable angle zones;

FIG. 10 is a cross-sectional view of a tapered interlayer having a tapered zone that extends over part of the width of the interlayer and two flat edge zones that extend over part of the width of the interlayer, where the tapered zone includes three constant angle zones and four variable angle zones;

FIG. 11a is a plan view of a tapered interlayer configured for use in a vehicle windshield, where the thickness profile of the interlayer is similar to the thickness profile of the interlayer depicted in FIG. 6;

FIG. 11b is a cross-sectional view of the interlayer of FIG. 11a, showing the thickness profile of the interlayer;

FIG. 12a is a diagram illustrating the reflected double image separation of a windshield utilizing a tapered interlayer including a HUD region with a constant angle zone from the short, nominal, and tall eyebox positions;

FIG. 12b is a diagram illustrating the reflected double image separation of a windshield utilizing a tapered interlayer including a HUD region with a variable angle zone from the short, nominal (or typical), and tall eyebox positions;

FIG. 13a is a schematic diagram illustrating a portion of the experimental set up for determining the reflected double image separation at various eyebox positions for a given windshield;

FIG. 13b is a schematic diagram illustrating another portion of the experimental set up for determining the reflected double image separation at various eyebox positions for a given windshield;

FIG. 14 is an example of a profile formed by analyzing a captured projection image by plotting the number of pixels for a primary and secondary image as a function of intensity;

FIG. 15 is a graph of a target wedge angle profile and the measured wedge angle profiles for interlayers used to form several windshields in the Example;

FIG. 16 is an example of a captured image of a windshield formed in the Example, highlighting the area from which an excerpt of the image was taken for further analysis;

FIG. 17 is an excerpted portion of the captured image of one of the windshields formed in the Example;

FIG. 18 is an excerpted portion of the captured image of another of the windshields formed in the Example;

FIG. 19 is an excerpted portion of the captured image of yet another of the windshields formed in the Example; and

FIG. 20 is an excerpted portion of the captured image of still another of the windshields formed in the Example.

## DETAILED DESCRIPTION

The present invention relates to a windshield and a method of producing the windshield, wherein the windshield and the method are defined in the claims. In general, the present description describes polymeric interlayers, as well as laminated windshields employing such interlayers, that can be used in a vehicle having a head-up display (HUD) system. More specifically, interlayers and windshields as described herein may be configured to minimize, or even prevent, reflected double image separation for drivers of all heights. Conventional windshields employ interlayers optimized to eliminate reflected double image separation at a single driver height, but do not address double or ghost images observed by taller or shorter drivers. As described in further detail below, windshields according to embodiments of the present invention minimize reflected double images at the shortest and tallest eyebox positions, while also preventing double or ghost images for nominal height drivers.

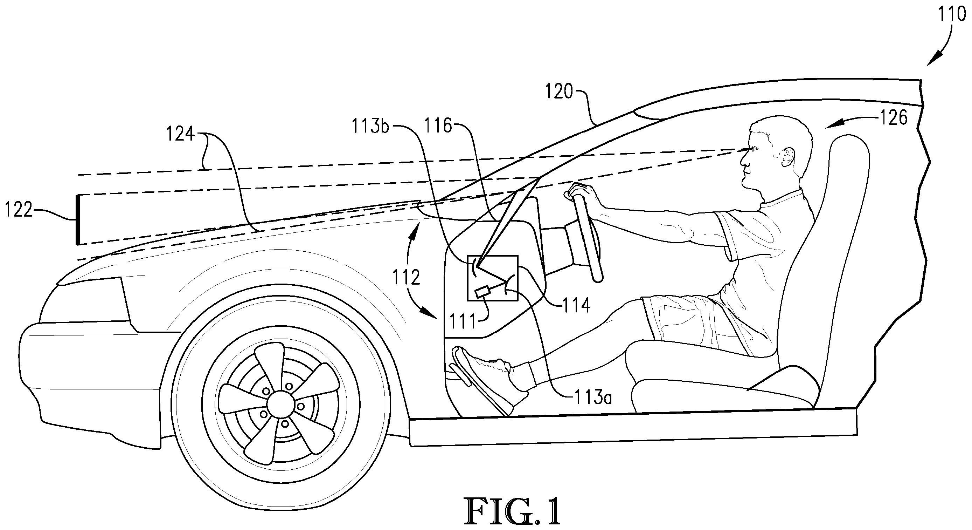

Turning initially to FIG. 1, a schematic partial view of a vehicle 110 employing a HUD system 112 is shown. HUD system 112 includes a projection assembly 114, which is mounted below the vehicle dashboard 116 and is configured to project an image onto the vehicle windshield 120. As the image is projected from the projection assembly 114 onto the windshield 120, the reflected images are collimated by the windshield 120 to create a single virtual image 122 near the front of the vehicle 110. The virtual image can be projected such that it intersects the field of view 124 of the driver 126, thereby enabling the driver 126 to view the projected image 122 while simultaneously operating the vehicle 110.

The HUD system 112 can be any suitable type of system capable of projecting an image onto a vehicle windshield. In general, suitable HUD systems utilize a system of relay optics and the reflection of the windshield to create a virtual image 122 outside of the vehicle. The HUD system 112 can include a projection unit 111 configured to transmit an image amongst a plurality of mirrors, shown in FIG. 1 as 113a and 113b, and ultimately to pass the image to windshield 120. Generally, at least one of the mirrors is concave, as shown by mirror 113b in FIG. 1, in order to magnify the image for projection onto the windshield 120. The HUD system 112 may be configured in one of many different ways, and may be specifically designed for a certain vehicle according to vendor-specified installation conditions.

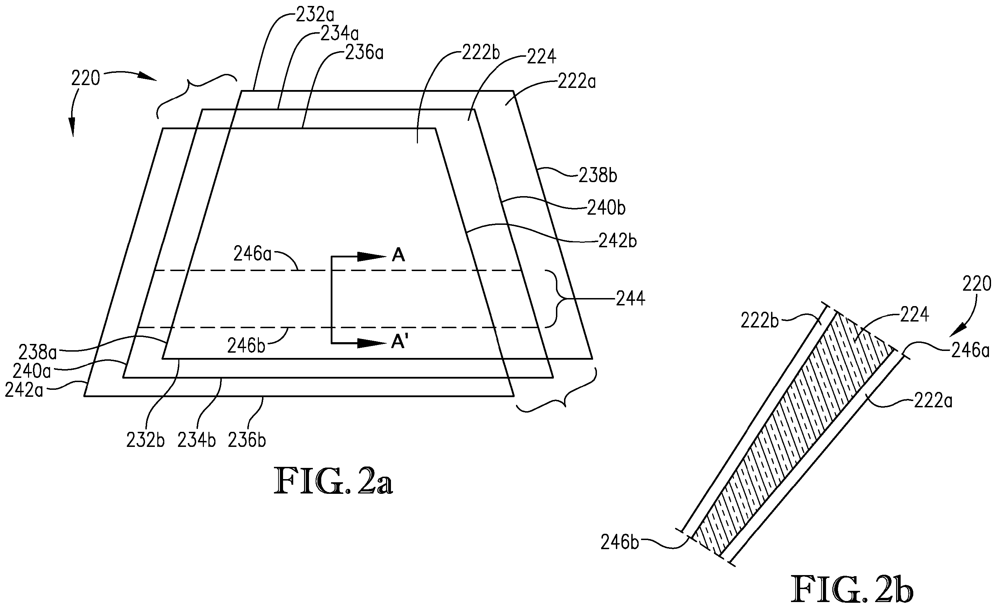

The windshield 120 is an integral optical component of the HUD system 112 and can act as the final optical combiner for reflecting the image into the driver's field of view 124. A windshield 220 configured according to embodiments of the present invention is illustrated in FIGS. 2a and 2b. Windshield 220 may comprise a pair of glazing panels 222a,b and a polymeric interlayer 224 disposed between and in contact with each of the panels 222a,b. Although shown in FIG. 2a for clarity in an exploded view, it should be understood that interlayer 224 may be in contact with a significant portion, or all, of the interior surfaces of each of panels 222a,b when assembled to form windshield 220.

Glazing panels 222a and 222b may be formed of any suitable material and can have dimensions required for any specific application. For example, in some embodiments, at least one of glazing panels 222a,b may be formed of a rigid material, such as glass, and each panels 222a,b may be formed from the same material or from different materials. In some embodiments, at least one of the panels 222a,b can be a glass panel, while, in other embodiments, at least one of the panels 222a,b can be formed of another material including, for example, a rigid polymer such as polycarbonate, acrylic, and combinations thereof. Typically, neither of the panels 222a,b is formed from softer polymeric materials including thermoplastic polymer materials more suitable for use in forming interlayer 224, as described in detail shortly.

In some embodiments, at least one of the panels 222a,b may comprise a glass panel. Any suitable type of glass may be used including, for example, a glass selected from the group consisting of alumina-silicate glass, borosilicate glass, quartz or fused silica glass, and soda lime glass. When used, the glass panel or panels may be annealed, thermally-treated, chemically-tempered, etched, coated, or strengthened by ion exchange, or one or both panels may have been subjected to one or more of these treatments. The glass itself may be rolled glass, float glass, or plate glass. In some embodiments, the glass may not be chemically-treated or strengthened by ion exchange, while, in other embodiments, the glass may not be an alumina-silicate glass. When both of panels 222a,b comprise glass panels, the type of glass used to form each may the same, or it may be different.

The panels 222a,b can have any suitable thickness. In some embodiments, the nominal thickness of the outboard panel 222b and/or inboard panel 222a can be at least about 0.4, at least about 0.5, at least about 0.6, at least about 0.7, at least about 0.8, at least about 0.9, at least about 1.0, at least about 1.1, at least about 1.2, at least about 1.3, at least about 1.4, at least about 1.5, at least about 1.6, at least about 1.7, at least about 1.8, at least about 1.9, at least about 2.0, at least about 2.1, at least about 2.2 millimeters (mm) and/or less than about 2.9 mm, less than about 2.8, less than about 2.7, less than about 2.6, less than about 2.5, less than about 2.4, less than about 2.3, less than about 2.2, less than about 2.1, less than about 2.0, less than about 1.9, less than about 1.8, less than about 1.7, less than about 1.6, less than about 1.5, less than about 1.4, less than about 1.3, less than about 1.2, less than about 1.1, or less than about 1.0 mm.

In certain embodiments, two panels 222a,b may have the same nominal thickness, which is typically referred to as a "symmetric" configuration, or one of the panels 222a,b may have thickness different than the other panel 222b,a. This is referred to as an "asymmetric" configuration. In certain embodiments when windshield 220 includes an asymmetric configuration, outboard panel 222b, which may be configured to face the outside of the vehicle, may have a greater thickness than inboard panel 222a, which may be configured to face toward the interior of the vehicle, when windshield 220 is installed in a vehicle. In certain embodiments, windshield 220 may have an asymmetric configuration in which inboard panel 222a has a greater thickness than outboard panel 222b.

As shown in FIG. 2a, inboard panel 222a, interlayer 224, and outboard panel 222b each include an upper installed edge, shown as 232a, 234a, and 236a, respectively, and a lower installed edge, shown as 232b, 234b, and 236b, respectively. Each of the upper and lower installed edges 232a,b, 234a,b and 236a,b of respective inboard panel 222a, interlayer 224, and outboard panel 222b can be spaced apart from each other in a generally vertical direction when windshield 120 is oriented in a manner similar to when it is installed in a vehicle.

Although terms such as "upper" and "lower" are relative, such terms, as used herein, are modified with "as installed" or "installed," which refers to the relative position of a component or item when a windshield including the component or item is oriented as it would be when installed in a vehicle. Therefore, the "upper installed edge" and the "lower installed edge" respectively refer to the upper and lower edges of the windshield when the windshield 220 is oriented as it would be when installed in a vehicle. In some embodiments, one or more of upper installed edges 232a, 234a, and 236a of inboard panel 222a, interlayer 224, and outboard panel 222b can be within about 5°, within about 3°, or within about 1° of being parallel to its corresponding lower installed edges 232b, 234b, and 236b.

As shown in FIG. 2a, inboard panel 222a, interlayer 224, and outboard panel 222b each include a driver side installed edge 238a, 240a, and 242a, respectively, and a passenger side installed edge 238a, 240b, and 242b, respectively. The driver side installed edge of each of inboard panel 222a, interlayer 224, and outboard panel 222b can be spaced apart from the corresponding passenger side installed edge 238b, 240b, and 242b in a generally horizontal direction when the windshield 220 is oriented as it would be when installed in a vehicle. Although referred to herein as the "driver side" and the "passenger side," it should be understood that the actual location of the driver and passenger may be reversed, depending on the country in which the vehicle employing the windshield is operated. These terms are used herein as a point of reference, and should not be construed as being unnecessarily limiting.

Additionally, as shown in FIG. 2a, each of driver side installed edges 238a, 240a, and 242a and passenger side installed edges 238b, 240b, and 242b of inboard panel 222a, interlayer 224, and outboard panel 222b intersect respective upper installed edges 232a, 234a, and 236a and lower installed edges 232b, 234b, and 236b at the corners of inboard panel 222a, interlayer 224, and outboard panel 222b, respectively. One or more of the driver side installed edges 238a, 240a, and 242a and/or one of the of one or more of the passenger side installed edges 238b, 240b, and 242b may be oriented at an angle with respect to the upper installed edges 232a, 234a, and 236a and/or lower installed edges 232b, 234b, and 236b of inboard panel 222a, interlayer 224, and outboard panel 222b. As a result, one or more of upper installed edges 232a, 234a, or 236a may be shorter than its corresponding lower installed edge 232b, 234b, or 236b. Additionally, although not depicted in FIG. 2a, the windshield may also be curved in one or more regions, and can, in some cases, have a complex curvature that changes in both the horizontal and vertical directions.

In certain embodiments, the length of at least one of upper installed edges 232a, 234a, and 236a of inboard panel 222a, interlayer 224, and outboard panel 222b may be at least about 500, at least about 650, at least about 750, at least about 850, at least about 950, at least about 1000 mm and/or not more than about 2500, not more than about 2000, not more than about 1500, not more than about 1250 mm, measured from the intersection of driver side installed edge 238a, 240a, or 242a with one end of upper installed edge 232a, 234a, or 236a to the intersection of passenger side edge 238b, 240b, or 242b with the other end of upper installed edge 232a, 234a, or 236a.

In certain embodiments, the length of at least one of lower installed edges 232b, 234b, and 236b of inboard panel 222a, interlayer 224, and outboard panel 222b may be at least about 750, at least about 900, at least about 1000, at least about 1250, or at least 1400 mm and/or not more than about 2500, not more than about 2250, not more than about 2000, not more than about 1850 mm, measured from the intersection of driver side installed edge 238a, 240a, or 242a with one end of lower installed edge 232b, 234b, or 236b to the intersection of passenger side edge 238b, 240b, or 242b with the other end of lower installed edge 232b, 234b, or 236b.

Further, in some embodiments, windshield 220 may have a curved lower region extending downwardly from lower installed edge 232b, 234b, and 236b of inboard panel 222a, interlayer 224, and outboard panel 222b. In such embodiments, the radius of curvature at the furthest point of the curved lower region from the lower installed edge 232b, 234b, or 236b can be at least 100, at least about 150, at least about 175, or at least about 200 mm and/or not more than about 325, not more than about 300, not more than about 275, not more than about 250, or not more than about 225 mm. However, exact dimensions may depend on the ultimate use of the windshield 220, and may vary outside the above ranges.

Referring now to FIGS. 2a and 2b, the interlayer 224 may define a HUD region 244 that includes at least one region of nonuniform thickness. As particularly shown in FIG. 2b, when laminated between outboard panel 222b and inboard panel 222a, the HUD region 244 of interlayer 224 may cause the outboard panel 222b to be oriented at a slight angle from the inboard panel 222a. The exact angle of orientation depends on the specific wedge profile of the interlayer 224, several embodiments of which will be discussed in detail shortly.

As shown in FIG. 2a, the HUD region 244 of interlayer 224 may be defined by an upper installed HUD boundary 246a and a lower installed HUD boundary 246b. As discussed previously, the upper and lower installed HUD boundaries 246a,b can be spaced from one another in a generally vertical direction when windshield 220 is oriented in a manner similar to when it is installed in a vehicle. Upper and lower installed HUD boundaries 246a,b can also be substantially parallel to respective upper and lower installed edges 234a,b of interlayer 224. As used herein the term "substantially parallel" means within about 5° of being parallel. In some embodiments, upper and lower installed HUD boundaries 246a,b can also be within about 3°, within about 2°, or within about 1° of being parallel to respective upper and lower installed edges 234a,b of interlayer 224.

As shown in FIG. 2a, the lower HUD installed boundary 246b can be spaced from the lower installed edge 234b of interlayer 224 along the height of the windshield 220 when windshield 220 is oriented in a manner similar to when it is installed in a vehicle. As used herein, the term "height" refers to the second largest dimension of the windshield 220, when it is oriented as it would be when installed in a vehicle. The height of windshield 220 can be defined between, for example, upper and lower installed edges 232a,b, 234a,b, and 236a,b of inboard panel 222a, interlayer 224, and outboard panel 222b, respectively. Similarly, the "width" is the largest dimension of the windshield, and may be defined between the driver side and passenger side installed edges 238a,b, 240a,b, and 242a,b of inboard panel 222a, interlayer 224, and outboard panel 222b, respectively. Additionally, the "thickness" of the windshield 220 is the smallest dimension and may be the combined thicknesses of inboard panel 222a, interlayer 224, and outboard panel 222b, when each are laminated together to form windshield 220.

As shown in FIG. 2a, the lower HUD installed boundary 246a can be positioned between and may be generally parallel to upper installed edge 234a and lower installed edge 234b of interlayer 224. For example, lower HUD installed boundary 246a may be spaced from the lower installed edge 234b of interlayer 224 by a distance of at least about 150, at least about 200, at least about 225, at least about 250, at least about 275, at least about 300, or at least about 350 mm and/or not more than about 550, not more than about 500, not more than about 450, or not more than about 425 mm. The upper HUD installed boundary 246a and the upper installed edge 234a of the interlayer 224 can be spaced apart from each other, along the height of the interlayer 224, by at least about 125, at least about 150, at least about 175, at least about 200, at least about 225, at least about 250, at least about 275, or at least about 300 mm and/or not more than about 750 mm, not more than about 650 mm, not more than about 500 mm, not more than about 450 mm.

The total height of the HUD zone 244, measured between the upper and lower HUD installed boundaries 246a,b in a direction parallel to the height of the interlayer, can be at least about 20, at least about 25, at least about 50, at least about 75, at least about 100 mm and/or not more than about 350, not more than about 300, not more than about 250, not more than about 225, not more than about 200, not more than about 175, or not more than about 150 mm. The total height of the HUD zone 244 may be consistent along the width of the interlayer 224, or the height may be different in one or more regions of the HUD zone than it is in one or more other regions of the HUD zone. In some embodiments, at least about 15, at least about 20, at least about 25, at least about 30, at least about 35 and/or not more than about 55, not more than about 50, not more than about 45, or not more than about 40 percent of the total length of a line drawn between and perpendicular to each of the upper installed edge 234a and the lower installed edge 234b of the interlayer 224 may fall within the HUD region 244 of interlayer 224.

The HUD region 244 may extend across a portion, or all, of the total width of the interlayer 224. In some embodiments, the upper and/or lower HUD installed boundary may extend at least about 30, at least about 40, at least about 50, at least about 55, at least about 60, at least about 65, at least about 70, at least about 75, at least about 85, or at least about 90 percent of the total distance between the driver side installed edge 240a and the passenger side installed edge 240b of interlayer 224. In some embodiments, as shown in FIG. 2a, the HUD region 244 may extend across the entirety of the interlayer 224, such that upper HUD installed boundary 246a and lower HUD installed boundary 246b each intersect the driver side installed edge 240a and the passenger side installed edge 240b of interlayer 224, as shown in FIG. 2a.

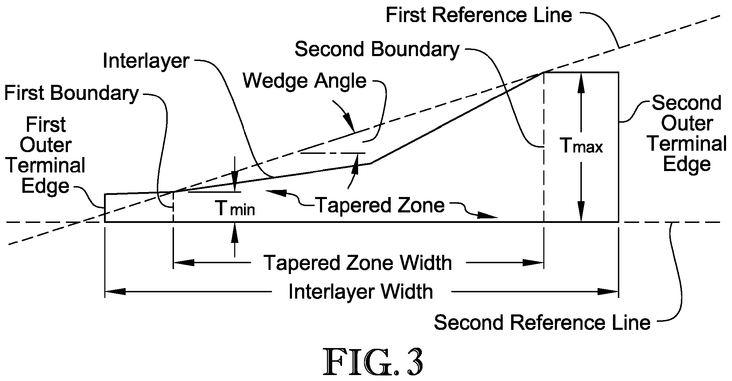

Turning now to FIGS. 3 through 11b, several embodiments of interlayers having an at least partially tapered thickness profile and wedge angle profiles according to the present invention are provided. FIG. 3 is a cross-sectional view of an exemplary tapered interlayer that includes a tapered zone of varying thickness. As shown in FIG. 3, the tapered zone has a minimum thickness, $T_{min}$, measured at a first boundary of the tapered zone and a maximum thickness, $T_{max}$, measured at a second boundary of the tapered zone. In certain embodiments, $T_{min}$ can be at least about 0.25, at least about 0.40, or at least about 0.60 mm and/or not more than 1.2, not more than about 1.1, or not more than about 1.0 mm. In certain embodiments, $T_{max}$ can be at least about 0.38, at least about 0.53, or at least about 0.76 mm and/or not more than 2.2, not more than about 2.1, or not more than about 2.0 mm. In certain embodiments, the difference between $T_{max}$ and $T_{min}$ can be at least about 0.13, at least about 0.15, at least about 0.20, at least about 0.25, at least about 0.30, at least about 0.35, at least about 0.40 mm and/or not more than 1.2, not more than about 0.90, not more than about 0.85, not more than about 0.80, not more than about 0.75, not more than about 0.70, not more than about 0.65, or not more than about 0.60 mm. In certain embodiments, the distance between the first and second boundaries of the tapered zone (i.e. the "tapered zone width") can be at least about 5, at least about 10, at least about 15, at least about 20, or at least about 30 centimeters (cm) and/or not more than about 200, not more than about 150, not more than about 125, not more than about 100 or not more than about 75 cm.

As shown in FIG. 3, the tapered interlayer includes opposite first and second outer terminal edges. In certain embodiments, the distance between the first and second outer terminal edges (i.e., the "interlayer width") can be at least about 20, at least about 40, or at least about 60 cm and/or not more than about 400, not more than about 200, or not more than about 100 cm. In the embodiment depicted in FIG. 3, the first and second boundaries of the tapered zone are spaced inwardly from the first and second outer terminal edges of the interlayer. In such embodiments, only a portion of the interlayer is tapered. When the tapered zone forms only a portion of the interlayer, the ratio of the interlayer width to the tapered zone width can be at least about 0.05:1, at least about 0.10:1, at least about 0.20:1, at least about 0.30:1, at least about 0.40:1 at least about 0.50:1, at least about 0.60:1, or at least about 0.70:1 and/or not more than about 1:1, not more than about 0.95:1, not more than about 0.90:1, not more than about 0.80:1, or not more than about 0.70:1. In an alternative embodiment, discussed below, the entire interlayer is tapered. When the entire interlayer is tapered, the tapered zone width can be equal to the interlayer width and the first and second boundaries of the tapered zone are located at the first and second terminal edges, respectively.

As illustrated in FIG. 3, the tapered zone of the interlayer can have a wedge angle ($\Theta$), which is defined as the angle formed between a first reference line extending through two points of the interlayer where the first and second tapered zone boundaries intersect a first (upper) surface of the interlayer and a second reference line extending through two points where the first and second tapered zone boundaries intersect a second (lower) surface of the interlayer. In certain embodiments, the tapered zone can have at least one wedge angle of at least about 0.10, at least about 0.13, at least about 0.15, at least about 0.20, at least about 0.25, at least about 0.30, at least about 0.35, or at least about 0.40 milliradians (mrad) and/or not more than about 1.2, not more than about 1.0, not more than about 0.90, not more than about 0.85, not more than about 0.80, not more than about 0.75, not more than about 0.70, not more than about 0.65, or not more than about 0.60 mrad.

When the first and second surfaces of the tapered zone are each planar, the wedge angle of the tapered zone can be defined as the angle between the first (upper) and second (lower) surfaces. However, as discussed in further detail below, in certain embodiments, the tapered zone can include at least one variable angle zone having a curved thickness profile and a continuously varying wedge angle. Further, in certain embodiments, the tapered zone can include two or more constant angle zones, where the constant angle zones each have a linear thickness profile, but at least two of the constant angle zones have different wedge angles.

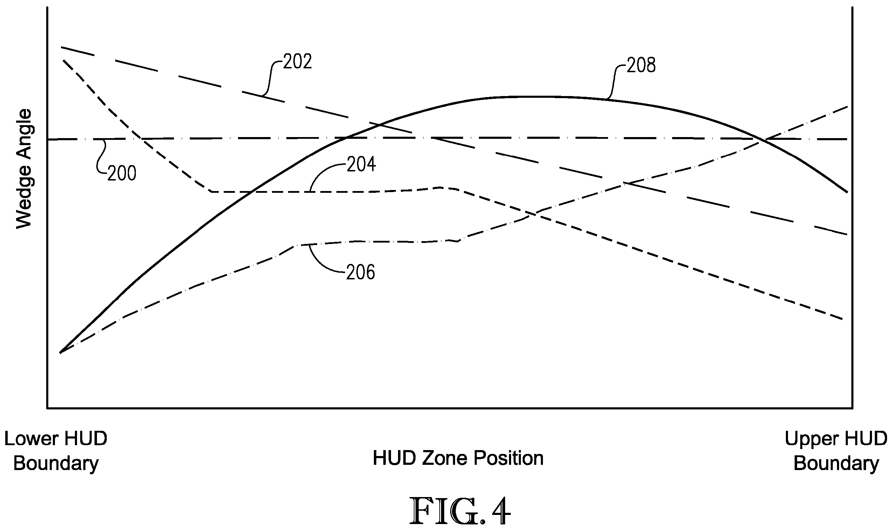

Referring now to FIG. 4, some exemplary wedge angle profiles for various tapered interlayers that may be suitable for use in certain embodiments of the present invention are shown. A wedge angle profile is a graphical depiction of the wedge angle of an interlayer as a function of position within the HUD region. The wedge angle profile of a tapered interlayer may increase, decrease, and/or remain constant over at least a portion of the HUD region. In certain embodiments, the wedge angle profile may increase over at least a portion of the HUD region. Examples of this type of wedge angle profile are shown by lines 206 and 208 in FIG. 4. When at least a portion of the wedge angle profile increases, at least a portion may also remain constant (as shown by line 206), or a portion of the profile may also decrease (as shown by line 208). In some embodiments (not shown), the wedge angle profile may increase over the entirety of the HUD region.

In certain embodiments, the wedge angle profile may decrease over at least a portion of the HUD region. Examples of this type of wedge angle profile are shown by lines 202 and 204 in FIG. 4. When at least a portion of the wedge angle profile of an interlayer decreases, the wedge angle profile may also increase (not shown) and/or remain constant (as shown by line 204) over a portion of the HUD region. In certain embodiments (shown by line 202), the wedge angle may decrease over the entirety of the HUD region. In certain embodiments, the wedge angle profile may remain constant over at least a portion of the HUD region, as shown by line 200 in FIG. 4. Interlayers having other combinations of regions of increasing, decreasing, and constant wedge angles are also possible and within the scope of the present invention.

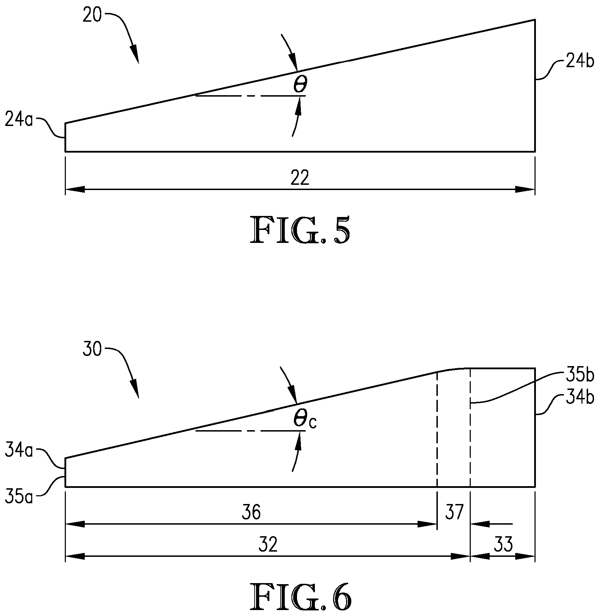

FIGS. 5 through 10 illustrate profiles of several of tapered interlayers configured according to certain embodiments of the present invention. As discussed previously, the specific configuration of an interlayer for use in a given windshield utilized by a vehicle having a HUD projection system depends on several factors, including, for example, the specific vehicle design and the HUD system configuration. FIGS. 5 through 10 provide some exemplary tapered interlayer profiles that may be suitable for certain embodiments, although other interlayer shapes not shown may be equally suitable, depending on the specific application. It should be understood that the tapered thickness profiles and wedge angle profiles of the interlayers discussed herein refer to "vertical" profiles, taken along a line extending between the upper installed edge 234a and the lower installed edge 234b of the interlayer 224, unless otherwise noted. In certain embodiments, the interlayer 224 may not have a tapered thickness profile or a wedge angle profile in the horizontal direction (i.e., a horizontal thickness profile) within HUD region 244. In certain embodiments, the maximum horizontal wedge angle of the interlayer 224 may be less than 0.10, less than 0.075, less than 0.05, or less than 0.025 mrad.

Turning initially to FIG. 5, an interlayer 20 that includes a tapered zone 22 extending entirely from a first terminal edge 24a of the interlayer 20 to a second terminal edge 24b of the interlayer 20 is depicted. In this configuration, the first and second boundaries of the tapered zone are located at the first and second terminal edges 24a,b of the interlayer. The entire tapered zone 22 of the interlayer 20 depicted in FIG. 5 has a constant wedge angle $\Theta$ that is simply the angle formed between the planar first (upper) and second (lower) planar surfaces of the interlayer 20.

FIG. 6 illustrates an interlayer 30 that includes a tapered zone 32 and a flat edge zone 33. The first boundary 35a of the tapered zone 32 is located at the first terminal edge 34a of the interlayer 30, while the second boundary 35b of the tapered zone 32 is located where the tapered zone 32 and the flat edge zone 33 meet. The tapered zone 32 includes a constant angle zone 36 and a variable angle zone 37. The constant angle zone 36 has a linear thickness profile and a constant wedge angle, $\Theta_c$, while the variable angle zone 37 has a curved thickness profile and a continuously varying wedge angle. The starting wedge angle of the variable angle zone 37 is equal to the constant wedge angle $\Theta_c$ and the ending wedge angle of the variable angle zone 37 is zero. The interlayer 30 depicted in FIG. 6 has a constant wedge angle $\Theta_c$ that is greater than the overall wedge angle of the entire tapered zone 32.

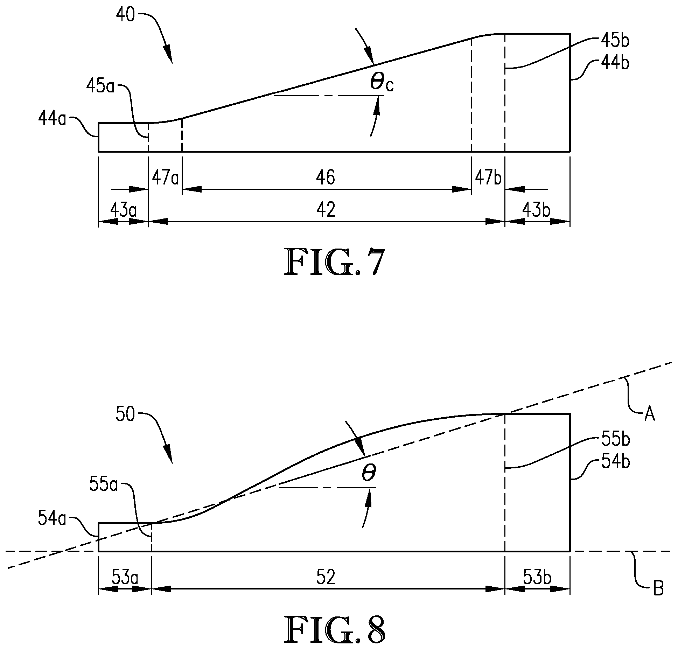

FIG. 7 illustrates an interlayer 40 that includes a tapered zone 42 located between first and second flat edge zones 43a,b. The first boundary 45a of the tapered zone 42 is located where the tapered zone 42 and the first flat edge zone 43a meet, while the second boundary 45b of the tapered zone 42 is located where the tapered zone 42 and the second flat edge zone 43b meet. The tapered zone 42 includes a constant angle zone 46 located between first and second variable angle zones 47a,b. The first variable angle zone 47a forms a transition zone between the first flat edge zone 43a and the constant angle zone 46. The second variable angle zone 47b forms a transition zone between the second flat edge zone 43b and the constant angle zone 46. The constant angle zone 46 has a linear thickness profile and a constant wedge angle, $\Theta_c$, while the first and second variable angle zones 47a,b have curved thickness profiles and continuously varying wedge angles. The starting wedge angle of the first variable angle zone 47a is equal to zero and the ending wedge angle of the first variable angle zone 47b is equal to the constant wedge angle $\Theta_c$. The starting wedge angle of the second variable angle zone 47b is equal to the constant wedge angle $\Theta_c$ and the ending wedge angle of the second variable angle zone 47b is zero. The interlayer 40 depicted in FIG. 7 has a constant wedge angle $\Theta_c$ that is greater than the overall wedge angle of the entire tapered zone 42.

FIG. 8 illustrates an interlayer 50 that includes a tapered zone 52 located between first and second flat edge zones 53a,b. The tapered zone 52 of the interlayer 50 does not include a constant angle zone. Rather, the entire tapered zone 52 of the interlayer 50 is a variable angle zone having a curved thickness profile and a continuously varying wedge angle. As described above, the overall wedge angle, $\Theta$, of the tapered zone 52 is measured as the angle between a first reference line "A" extending through the two points where the first and second boundaries 55a,b of the tapered zone 52 meet the first (upper) surface of the interlayer 50 and a second reference line "B" extending through the two points where the first and second boundaries 55a,b of the tapered zone 52 meet the second (lower) surface of the interlayer 50. However, within the tapered zone 52, the curved thickness profile provides an infinite number of wedge angles, which can be greater than, less than, or equal to the overall wedge angle $\Theta$ of the entire tapered zone 52.

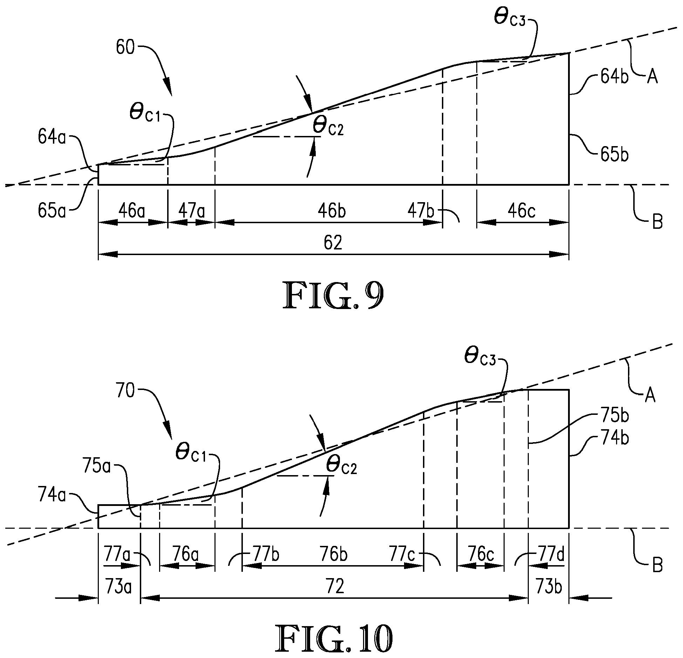

FIG. 9 illustrates an interlayer 60 that does not include any flat end portions. Rather, the tapered zone 62 of the interlayer 60 forms the entire interlayer 60. Thus, the first and second boundaries 65a,b of the tapered zone 60 are located at the first and second terminal edges 64a,b of the interlayer 60. The tapered zone 62 of the interlayer 60 includes first, second, and third constant angle zones 46a-c separated by first and second variable angle zones 47a,b. The first, second, and third constant angle zones 46a-c each have a linear thickness profile and each have unique first, second, and third constant wedge angles, $\Theta_{c1}, \Theta_{c2}, \Theta_{c3}$, respectively. The first variable angle zone 47a acts as a transition zone between the first and second constant angle zones 46a,b. The second variable angle zone 47b acts as a transition zone between the second and third constant angle zones 46b,c. As discussed above, the overall wedge angle, $\Theta$, of the tapered zone 62 is measured as the angle between a first reference line "A" and a second reference line "B." The first constant wedge angle $\Theta_{c1}$ is less than the overall wedge angle $\Theta$ of the tapered zone 62. The second constant wedge angle $\Theta_{c2}$ is greater the overall wedge angle $\Theta$ of the tapered zone 62. The third constant wedge angle $\Theta_{c3}$ is less than the overall wedge angle $\Theta$ of the tapered zone 62. The wedge angle of the first variable angle zone 47a continuously increases from the first constant wedge angle $\Theta_{c1}$ to the second constant wedge angle, $\Theta_{c2}$. The wedge angle of the second variable angle zone 47b continuously decreases from the second constant wedge angle $\Theta_{c2}$ to the third wedge angle $\Theta_{c3}$.

FIG. 10 illustrates an interlayer 70 that includes a tapered zone 72 located between first and second flat edge zones 73a,b. The first and second boundaries 75a,b of the tapered zone 72 are spaced inwardly from the first and second outer edges 74a,b of the interlayer 70. The tapered zone 72 of the interlayer 70 includes first, second, third, and fourth variable angle zones 77a-d and first, second, and third constant angle zones 76a-c. The first variable angle zone 77a acts as a transition zone between the first flat edge zone 73a and the first constant angle zone 76a. The second variable angle zone 77b acts as a transition zone between the first constant angle zone 76a and the second constant angle zone 76b. The third variable angle zone 77c acts as a transition zone between the second constant angle zone 76b and the third constant angle zone 76c. The fourth variable angle zone 77d acts as a transition zone between the third constant angle zone 76c and the second flat edge zone 73b. The first, second, and third constant angle zones 76a-c each have a linear thickness profile and each have unique first, second, and third constant wedge angles, $\Theta_{c1}, \Theta_{c2}, \Theta_{c3}$, respectively. As discussed above, the first, second, third, and fourth variable angle zones 77a-d have wedge angles that continuously transition from the wedge angle of the constant angle zone on one side of the variable angle zone 77 to the wedge angle of the constant angle zone on the other side of the variable angle zone 77.

As discussed above, the tapered interlayer can include one or more constant angle tapered zones, each having a width that is less than the overall width of the entire tapered zone. Each tapered zone can have a wedge angle that is the same as or different than the overall wedge angle of the entire tapered zone. For example, the tapered zone can include one, two, three, four, five or more constant angle tapered zones. When multiple constant angle tapered zones are employed, the constant angle tapered zones can be separated from one another by variable angle tapered zones that serve to transition between adjacent constant angle tapered zones.

In certain embodiments, the width of each constant angle tapered zone can be at least about 2, at least about 5, at least about 10, at least about 15, or at least about 20 cm and/or not more than about 150, not more than about 100, or not more than about 50 cm. In certain embodiments, the ratio of the width of each constant angle tapered zone to the overall width of the entire tapered zone can be at least about 0.1:1, at least about 0.2:1, at least about 0.3:1 or at least about 0.4:1 and/or not more than about 0.9:1, not more than about 0.8:1, not more than about 0.7:1, not more than about 0.6:1, or not more than about 0.5:1.

In certain embodiments, the wedge angle of each constant angle tapered zone can be at least about 0.13, at least about 0.15, at least about 0.20, at least about 0.25, at least about 0.30, at least about 0.35, at least about 0.40 mrad and/or not more than about 1.2, not more than about 1.0, not more than about 0.90, not more than about 0.85, not more than about 0.80, not more than about 0.75, not more than about 0.70, not more than about 0.65, or not more than about 0.60 mrad. In certain embodiments, the wedge angle of at least one constant angle tapered zone is at least about 0.01, at least about 0.05, at least about 0.10, at least about 0.20, at least about 0.30, or at least about 0.40 mrad greater than the overall wedge angle of the entire tapered zone.

In certain embodiments, the wedge angle of at least one constant angle tapered zone is at least about 0.01, at least about 0.05, at least about 0.10, at least about 0.20, at least about 0.30, or at least about 0.40 mrad less than the overall wedge angle of the entire tapered zone. In certain embodiments, the wedge angle of at least one constant angle tapered zone is not more than about 0.40, not more than about 0.30, not more than about 0.20, not more than about 0.10, not more than about 0.05, or not more than about 0.01 mrad greater than the overall wedge angle of the entire tapered zone. In certain embodiments, the wedge angle of at least one constant angle tapered zone is not more than about 0.40, not more than about 0.30, not more than about 0.20, not more than about 0.10, not more than about 0.05, or not more than about 0.01 mrad less than the overall wedge angle of the entire tapered zone.

In certain embodiments, the tapered interlayer can include at least one variable angle zone. The width of the variable angle zone may be less than the overall width of the entire tapered zone, or it may be the same as the tapered zone width. The width of each variable angle tapered zone can be at least about 2, at least about 5, at least about 10, at least about 15, or at least about 20 cm and/or not more than about 150, not more than about 100, or not more than about 50 cm. In certain embodiments, the ratio of the width of each variable angle tapered zone to the overall width of the entire tapered zone can be at least about 0.1:1, at least about 0.2:1, at least about 0.3:1 or at least about 0.4:1 and/or not more than about 0.9:1, not more than about 0.8:1, not more than about 0.7:1, not more than about 0.6:1, or not more than about 0.5:1. The variable angle zone may have a curved thickness profile and may, optionally, include one or more constant angle zones as described in detail previously. The interlayer may include at least two, at least three, or four or more variable angle zones.

In certain embodiments, the interlayer used to form a windshield as described herein may be a single layer, or monolithic, interlayer. In certain embodiments, the interlayer may be a multiple layer interlayer comprising at least a first polymer layer and a second polymer layer. When the interlayer is a multiple layer interlayer, it may also include a third polymer layer such that the second polymer layer is adjacent to and in contact with each of the first and third polymer layers, thereby sandwiching the second polymer layer between the first and third polymer layers. As used herein, the terms "first," "second," "third," are used to describe various elements, but such elements should not be unnecessarily limited by these terms. These terms are only used to distinguish one element from another and do not necessarily imply a specific order or even a specific element. For example, an element may be regarded as a "first" element in the description and a "second" element in the claims without being inconsistent. Consistency is maintained within the description and for each independent claim, but such nomenclature is not necessarily intended to be consistent therebetween. Such three-layer interlayers may be described as having at least one inner "core" layer sandwiched between two outer "skin" layers. In certain embodiments, the interlayer may include more than three, more than four, or more than five polymer layers.

Each polymer layer of the interlayer may include one or more polymeric resins, optionally combined with one or more plasticizers, which have been formed into a sheet by any suitable method. One of more of the polymer layers in an interlayer may further include additional additives, although these are not required. The polymeric resin or resins utilized to form an interlayer as described herein may comprise one or more thermoplastic polymer resins. When the interlayer includes more than one layer, each layer may be formed of the same, or of a different, type of polymer.

Examples of polymers suitable for forming the interlayer can include, but are not limited to, poly(vinyl acetal) polymers, polyurethanes (PU), poly(ethylene-co-vinyl) acetates (EVA), poly(vinyl chlorides) (PVC), poly(vinylchloride-co-methacrylate), polyethylenes, polyolefins, ethylene acrylate ester copolymers, poly(ethylene-co-butyl acrylate), silicone elastomers, epoxy resins, and acid copolymers such as ethylene/carboxylic acid copolymers and ionomers thereof, derived from any of the previously-listed polymers, and combinations thereof. In some embodiments, the thermoplastic polymer can be selected from the group consisting of poly(vinyl acetal) resins, poly(vinyl chloride), poly(ethylene-co-vinyl) acetates, and polyurethanes, while in other embodiments, the polymer can comprise one or more poly(vinyl acetal) resins. Although generally described herein with respect to poly(vinyl acetal) resins, it should be understood that one or more of the above polymers could be included in addition to, or in the place of, the poly(vinyl acetal) resins described below in accordance with various embodiments of the present invention.

When the polymer used to form interlayer includes a poly(vinyl acetal) resin, the poly(vinyl acetal) resin may include residues of any aldehyde and, in some embodiments, may include residues of at least one $C_4$ to $C_8$ aldehyde. Examples of suitable $C_4$ to $C_8$ aldehydes can include, for example, n-butyraldehyde, i-butyraldehyde, 2-methylvaleraldehyde, n-hexyl aldehyde, 2-ethylhexyl aldehyde, n-octyl aldehyde, and combinations thereof. In certain embodiments, the poly(vinyl acetal) resin may be a poly(vinyl butyral) (PVB) resin that primarily comprises residues of n-butyraldehyde. Examples of suitable types of poly(vinyl acetal) resins are described in detail in co-pending Application Serial No. 14/563,011 (now U.S. Publication No. 2016-0159041A1).

In certain embodiments, the interlayer may include one or more polymer films in addition to one or more polymer layers present in the interlayer. As used herein, the term "polymer film" refers to a relatively thin and often rigid polymer that imparts some sort of functionality or performance enhancement to the interlayer. The term "polymer film" is different than a "polymer layer" or "polymer sheet" as described herein, in that polymer films do not themselves provide the necessary penetration resistance and glass retention properties to the multiple layer panel, but, rather, provide performance improvements, such as infrared absorption or reflection character.

In certain embodiments, poly(ethylene terephthalate), or "PET," may be used to form a polymer film and, ideally, the polymer films used in various embodiments are optically transparent. The polymer films suitable for use in certain embodiments may also be formed of other materials, including various metallic, metal oxide, or other non-metallic materials and may be coated or otherwise surface-treated. The polymer film may have a thickness of at least about 0.013, at least about 0.015, at least about 0.020, at least about 0.025, at least about 0.030, or at least about 0.040 mm and/or not more than about 0.060, not more than about 0.050, not more than about 0.045, or not more than about 0.035 mm.

According to some embodiments, the polymer film may be a restretched thermoplastic film having specified properties, while, in other embodiments, the polymer film may include a plurality of nonmetallic layers that function to reflect infrared radiation without creating interference, as described, for example, in U.S. Patent No. 6,797,396. In certain embodiments, the polymer film may be surface treated or coated with a functional performance layer in order to improve one or more properties of the film, including adhesion or infrared radiation reflections. Other examples of polymer films are described in detail in PCT Application Publication No. WO88/01230 and U.S. Patent Nos. 4,799,745, 4,017,661, and 4,786,783. Other types of functional polymer films can include, but are not limited to, IR reducing layers, holographic layers, photochromic layers, electrochromic layers, antilacerative layers, heat strips, antennas, solar radiation blocking layers, decorative layers, and combinations thereof.

Additionally, at least one polymer layer in the interlayers described herein may include one or more types of additives that can impart particular properties or features to the polymer layer or interlayer. Such additives can include, but are not limited to, dyes, pigments, stabilizers such as ultraviolet stabilizers, antioxidants, anti-blocking agents, flame retardants, IR absorbers or blockers such as indium tin oxide, antimony tin oxide, lanthanum hexaboride ($LaB_6$) and cesium tungsten oxide, processing aides, flow enhancing additives, lubricants, impact modifiers, nucleating agents, thermal stabilizers, UV absorbers, dispersants, surfactants, chelating agents, coupling agents, adhesives, primers, reinforcement additives, and fillers. Additionally, various adhesion control agents ("ACAs") can also be used in one or more polymer layers in order to control the adhesion of the layer or interlayer to a sheet of glass. Specific types and amounts of such additives may be selected based on the final properties or end use of a particular interlayer and may be employed to the extent that the additive or additives do not adversely affect the final properties of the interlayer or windshield utilizing the interlayer as configured for a particular application.

According to some embodiments, interlayers as described herein may be used to form windshields that exhibit desirable acoustic properties, as indicated by, for example, the reduction in the transmission of sound as it passes through (i.e., the sound transmission loss of) the laminated panel. In certain embodiments, windshields formed with interlayers as described herein may exhibit a sound transmission loss at the coincident frequency, measured according to ASTM E90 at 20°C, of at least about 34, at least about 34.5, at least about 35, at least about 35.5, at least about 36, at least about 36.5, or at least about 37 dB or more.

The overall average thickness of the interlayer can be at least about 0.254 mm (10 mils) at least about 0.381 mm (15 mils), at least about 0.508 mm (20 mils), at least about 0.635 mm (25 mils) at least about 0.762 mm (30 mils) or at least about 0.889 mm (35 mils) and/or not more than about 2.54 mm (100 mils) not more than about 2.286 mm (90 mils) not more than about 1.905 mm (75 mils), not more than about 1.524 mm (60 mils) not more than about 1.270 mm (50 mils) not more than about 1.143 mm (45 mils) not more than about 1.016 mm (40 mils) not more than about 0.889 mm (35 mils), not more than about 0.813 mm (32 mils) although other thicknesses may be used as desired, depending on the particular use and properties of the windshield and interlayer. If the interlayer is not laminated between two substrates, its average thickness can be determined by directly measuring the thickness of the interlayer using a caliper, or other equivalent device. If the interlayer is laminated between two substrates, its thickness can be determined by subtracting the combined thickness of the substrates from the total thickness of the multiple layer panel.

Interlayers used to form windshields as described herein can be formed according to any suitable method. Exemplary methods can include, but are not limited to, solution casting, compression molding, injection molding, melt extrusion, melt blowing, and combinations thereof. Multilayer interlayers including two or more polymer layers may also be produced according to any suitable method such as, for example, co-extrusion, blown film, melt blowing, dip coating, solution coating, blade, paddle, air-knife, printing, powder coating, spray coating, lamination, and combinations thereof.

When the interlayer is formed by an extrusion or co-extrusion process, one or more thermoplastic resins, plasticizers, and, optionally, one or more additives as described previously, can be pre-mixed and fed into an extrusion device. The extrusion device can be configured to impart a particular profile shape to the thermoplastic composition in order to create an extruded sheet. The extruded sheet, which is at an elevated temperature and highly viscous throughout, can then be cooled to form a polymeric sheet. Once the sheet has been cooled and set, it may be cut and rolled for subsequent storage, transportation, and/or use as an interlayer.

Co-extrusion is a process by which multiple layers of polymer material are extruded simultaneously. Generally, this type of extrusion utilizes two or more extruders to melt and deliver a steady volume throughput of different thermoplastic melts of different viscosities or other properties through a co-extrusion die into the desired final form. The thickness of the multiple polymer layers leaving the extrusion die in the co-extrusion process can generally be controlled by adjustment of the relative speeds of the melt through the extrusion die and by the sizes of the individual extruders processing each molten thermoplastic resin material.

In certain embodiments, the interlayers used to form windshield as described herein may be produced such that the interlayer has a wedge angle profile that deviates from a predetermined, or prescribed, wedge angle profile for a target interlayer by no more than 0.10, no more than 0.075, no more than 0.05 mrad over at least about 50, at least about 60, at least about 70, at least about 80, or at least about 90 percent of the HUD region. In certain embodiments, the wedge angle profile of the formed interlayer may deviate from the predetermined wedge angle profile by no more than 0.10, no more than 0.075, no more than 0.05 mrad over the entire HUD region. The wedge angle profile for a given interlayer is determined as described in the Example below using the Savitzky-Golay method over a 76.2 mm (3-inch) wide segment using a first order polynomial fit.

Methods of making such interlayers, or windshields including such interlayers, include the steps of obtaining a prescribed wedge angle profile for a target interlayer having a HUD region, and then forming an interlayer to have a similar wedge angle profile as the target interlayer. More particularly, the formation of the interlayer may be carried out such that the wedge angle profile of the formed interlayer varies from the prescribed wedge angle profile for the HUD region of the target interlayer by an amount within one or more of the above ranges. Such deviations can be determined by measuring the wedge angle of the formed interlayer, using, for example, a method as described in the Example below.

Alternatively, or in addition, the thickness profile of the formed interlayer may also be measured, and the measured thickness profile may be compared to a target thickness profile at one or more points along the interlayer. In certain embodiments, the maximum difference between the measured thickness profile of an interlayer formed as described herein, and a predetermined target thickness profile may be not more than about 0.005, not more than about 0.0025, not more than about 0.0020, or not more than about 0.0015 mm. Alternatively, or in addition, the difference between the measured thickness profile of an interlayer formed as described herein, and a predetermined target thickness profile can be at least about 0.025, at least about 0.05, or at least about 0.10 percent and/or not more than about 0.25, not more than about 0.20, not more than about 0.15, or not more than about 0.10 percent, based on the target thickness at a given point.

The target wedge angle profile or target thickness profile may be provided by, for example, a third party vendor, such as a laminator, a HUD system vendor, or a vehicle manufacturer, or it may be otherwise determined. In some embodiments, the measured wedge angle profile for a formed interlayer may vary slightly in shape from the target profile, but may still exhibit a maximum variation from the target wedge angle profile within the above ranges. The wedge angle and thickness of the formed interlayer may be measured as described in the Example below.

Windshields and other types of multiple layer panels may be formed from the interlayers and glazing panels as described herein by any suitable method. The typical glass lamination process comprises the following steps: (1) assembly of the two substrates and the interlayer; (2) heating the assembly via an IR radiant or convective device for a first, short period of time; (3) passing the assembly into a pressure nip roll for the first de-airing; (4) heating the assembly for a short period of time to about 60°C to about 120°C to give the assembly enough temporary adhesion to seal the edge of the interlayer; (5) passing the assembly into a second pressure nip roll to further seal the edge of the interlayer and allow further handling; and (6) autoclaving the assembly at temperature between 135°C and 150°C and pressures between 150 psig and 200 psig for about 30 to 90 minutes. Other methods for de-airing the interlayer-glass interface, as described according to one embodiment in steps (2) through (5) above include vacuum bag and vacuum ring processes, and both may also be used to form windshields and other multiple layer panels as described herein.

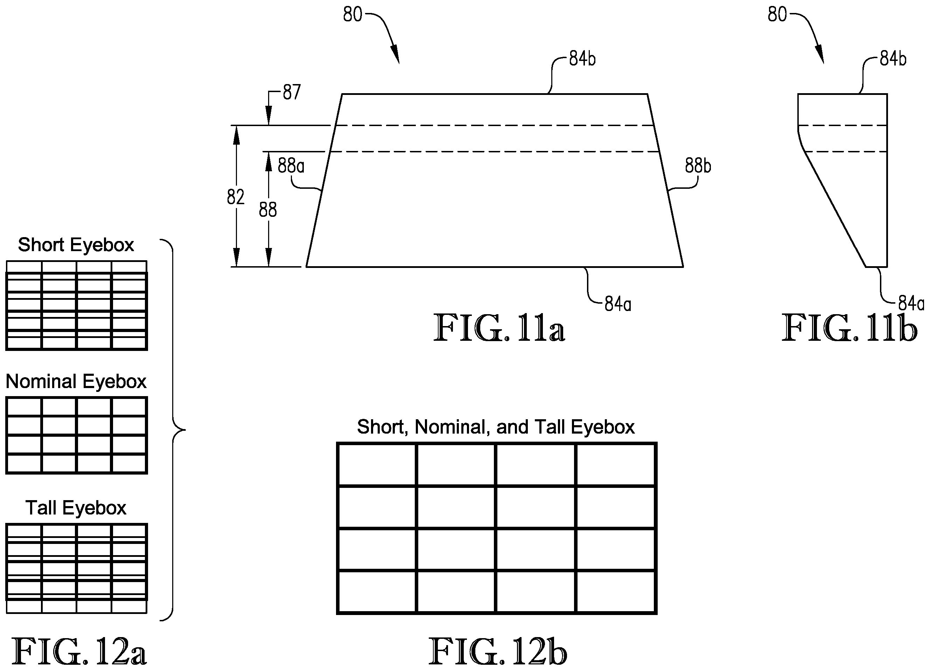

Windshields configured according to certain embodiments of the present invention are designed to minimize reflected double image separation for drivers of different heights. As used herein, the term "reflected double image separation" refers to the separation distance between the primary image and the interfering secondary, or "ghost," image that is caused by the differences in position of the projected image when it is reflected off the inside and outside surfaces of the glass. In contrast to conventional windshields, which are typically optimized to accommodate drivers of an average, or "nominal," height, windshields of the present invention may exhibit little or no double image separation for drivers shorter or taller than average or nominal. An example of the double image separation experienced by short and tall drivers, as compared to drivers of "nominal" height for conventionally optimized interlayers is provided in FIG. 12a. As shown in FIG. 12b, windshields configured according to embodiments of the present invention minimize reflected double image separation for all driver heights, providing a clearer, more readable virtual image at all heights.

In certain embodiments, windshields configured as described herein may exhibit at least one of an upper eyebox reflected double image separation distance of less than about 0.58 mrad (2 arc-min) and a lower eyebox reflected double image separation distance of less than about 0.58 mrad (2 arc-min) when measured at standard installation conditions for the particular windshield. As used herein, the term "eyebox" refers to a three-dimensional area in which the eye of the driver is positioned when the driver is seated in the vehicle in which the windshield and HUD projection system are installed. Typically, the eyebox is slightly larger than the eye itself to allow the driver some freedom of head movement, but does not extend more than 50 mm above or below, not more than 75 mm to the left or right, and not more than 50 mm in front of or behind the center point of the driver's eye when the driver is comfortably seated in the driver's seat. As used herein, the term "comfortably seated" means sitting with one's back against the driver's seat, one's foot on the pedals, and one's hands on the steering wheel.

In certain embodiments, windshields as described herein can have both an upper eyebox reflected double image separation distance of less than 0.58 mrad (2 arc-min) and a lower eyebox reflected double image separation distance of less than about 0.58 mrad (2 arc-min), when measured at standard installation conditions for that windshield. In certain embodiments, windshields may exhibit at least one of an upper eyebox reflected double image separation distance of less than about 0.51 mrad (1.75 arc-min) less than about 0.44 mrad (1.5 arc-min) less than about 0.36 mrad (1.25 arc-min) less than about 0.29 mrad (1 arc-min), or less than about 0.15 mrad (0.5 arc-min) and/or a lower eyebox reflected double image separation distance of less than about 0.51 mrad (1.75 arc-min) less than about 0.44 mrad (1.5 arc-min) less than about 0.36 mrad (1.25 arc-min) less than about 0.29 mrad (1 arc-min) or less than about 0.15 mrad (0.5 arc-min) when measured at standard installation conditions for that windshield. The upper and lower eyebox reflected double image separation distances are determined according to the following procedure.

The standard installation conditions for a given windshield must be determined in order to measure the upper and lower eyebox reflected double image separation distances for that windshield. As used herein, the term "standard installation conditions" refer to the installation conditions for a given windshield under which a nominal height driver observes the minimum reflected double image separation distance for that windshield. In certain embodiments, the minimum reflected double image separation distance at standard installation conditions can be less than about 0.44 mrad (1.5 arc-min) less than about 0.29 mrad (1 arc-min) less than about 0.22 mrad (0.75 arc-min) less than about 0.15 mrad (0.5 arc-min) or less than about 0.073 mrad (0.25 arc-min) measured as described below. A "nominal height" driver is a driver whose eyebox centerline is at a height of 134.4 mm from a line drawn horizontally from the lower most point on the interior of the windshield, as installed. Further details about measuring driver height will be provided shortly.

If the standard installation conditions of a windshield, including how it is oriented with respect to a HUD projection system, are known, the windshield and HUD projection system may be arranged in an experimental set up according to the known installation conditions. Such installation conditions may be provided by a vendor, or another third party, may be directly measurable from a vehicle, or may be accessible in reference material related to the make and design of the vehicle.

Alternatively, if the standard installation conditions of the windshield are unknown, these must be determined before measuring the upper or lower eyebox reflected double image separation distances for that windshield. Such a determination can be made by, for example, testing various values for certain parameters of the windshield and HUD projection system and determining which combination of parameters provides the minimal reflected double image separation for a given windshield. The set of conditions optimized to provide the minimal reflected double image separation for the nominal driver height for a given windshield, would be considered the "standard installation conditions" for that windshield.

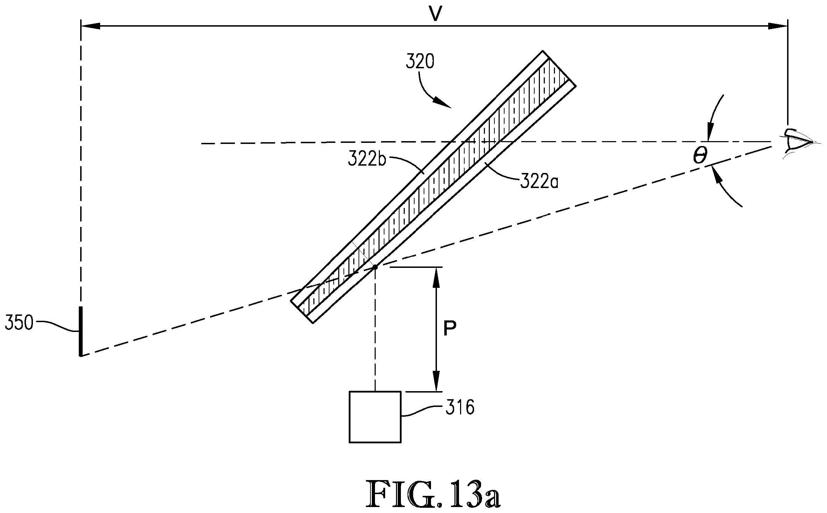

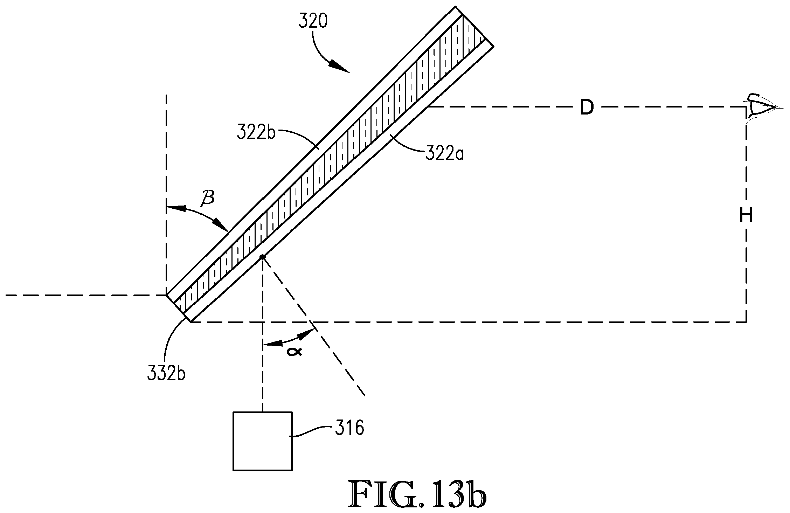

Referring now to FIGS. 13a and 13b, a schematic diagram of an experimental set up for testing the reflected double image separation distance of a windshield 320 is provided. Windshield 320 is positioned in a holder (not shown) and is oriented from the vertical at an angle, β, which is also referred to as the "rake angle" of the windshield. A suitable range of values for the rake angle is from 45 to 60°. As also shown in FIGS. 13a and 13b, the HUD projection system 316 is set up so that the image exiting the projection system 316 hits the inner surface of the inboard glass panel 322a as it would when the windshield and projection system were installed in a vehicle. The angle at which the projected image hits the surface of inner panel 322a is called the "angle of incidence" and the distance between the outlet of projection system 316 and the glass surface is called the "projection distance." The angle of incidence, shown as angle γ in FIG. 13a, is in the range of 30 to 45°, and the incident distance, shown as distance "P" in FIG. 13b, is between 5 and 20 cm. The virtual image distance is defined as the horizontal distance between the center point of the eye of the driver and the reflected virtual image 350. The virtual image distance is shown in FIG. 13b as distance "V," and can be in the range of 3 to 15 m.

The height of the driver is defined as the vertical straight-line distance between a straight line extending horizontally from the lower installed edge 332b of the inner panel 322b and the center point of the eye of the driver. This is shown in FIG. 13a as distance "H." When determining the standard installation conditions for a given windshield, the height of the driver, H, is set at 134.4 mm. The value of H varies to reflect changes in the height of the driver. The distance between the center point of the eye of the driver (or the center point of the driver's eyebox) and the surface of the inner panel 322a is defined as the "distance of driver." This distance is shown as "D" in FIG. 13a and will vary with the height of the driver. For a driver of nominal height, the distance of driver, D, will range from 600 to 1000 mm. Similar values are expected for taller and shorter drivers. Finally, as shown in FIG. 13b, the look down angle is defined as the angle between a horizontal line drawn from the center point of the eyebox of the driver and a straight line drawn through the center of the HUD region of the windshield 320 and through the centerline of the reflected virtual image 350. Similarly to driver distance, the look down angle, shown as Φ in FIG. 13b, will vary based on the height of the driver, but should be in the range of 5° to 10°.

In order to determine the standard installation conditions for windshield 320, windshield 320 and HUD projection system 316 are arranged at various combinations of values for rake angle, angle of incidence, projection distance, and virtual image distance within the above ranges for a nominal driver height (H) of 134.4 mm. Then, for each set of conditions, the double image separation of the windshield can be determined, according to the method described in further detail below. The combination of values for rake angle, angle of incidence, projection distance, and virtual image distance that results in the lowest value for double image separation distance for a given windshield can be considered the "standard installation conditions" for that windshield.

Although the driver height and look down angle can be calculated for the nominal driver height, these parameters are not optimized, *per se,* when determining the standard installation conditions, as described above. Rather, the ranges for these values provided above are utilized as optimization limits, such that the final value for both the driver distance, D, and the look down angle, Φ, calculated at the determined standard installation conditions must fall within the above ranges. Because the windshield 320 is oriented at an angle from the vertical, the driver distance, D, and look down angle, Φ, will change as the height of the driver changes, but should be within, or just outside of, the ranges provided above.

The double image separation distance of windshield 320 can be determined according to the following procedure. A projection image can be generated by passing light from the HUD projection system 316 through the windshield 320 when windshield 320 and projection system 316 are oriented as generally shown in FIGS. 13a and 13b. The light passing through the windshield 320 includes an image such as, for example, a line, a shape, a picture, or a grid. Once light has passed through and is reflected off the surfaces of the windshield 320, the virtual image can be viewed through the windshield 320. The projected image may be then captured using a digital camera or other suitable device, positioned with the center line of the camera lens positioned at the centerline of the eyebox. For determination of the standard windshield installation conditions, for example, the center line of the camera lens would be positioned at a height of 134.4 mm. The resulting image captured by the camera may then be digitized to form a digital projection image comprising a plurality of pixels.

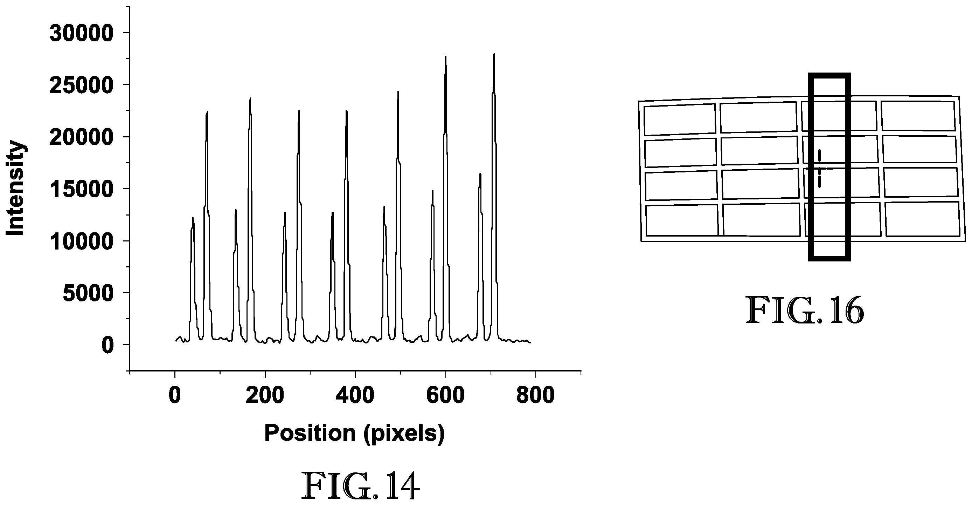

Once digitized, captured images can be quantitatively analyzed to form a profile that includes at least one primary image indicator and at least one secondary image indicator. The analyzing may be performed by converting at least a portion of the digital projection image to a vertical image matrix that includes a numerical value representing the intensity of pixels in that portion of the image. A column of the matrix can then be extracted and graphed against pixel number, as shown in FIG. 14, to provide the profile. The primary image indicator on the profile can then be compared with the secondary image indicator on the profile to determine a difference. In some embodiments, the primary image indicator may comprise the higher intensity peaks of the graph, while the secondary image indicator may be the lower intensity peaks. Any suitable difference between the two indicators can be determined and, in some embodiments, can be the difference in position between the two indicators in the profile graph.

Based on the difference, the separation distance, in pixels, between the primary and secondary peaks can then be used to calculate the double image separation distance ($D_1$) for each panel, in minutes (arc-min), according to the following equation:

$$D = 1000 \; x \; \frac{peak\; separation\; (pixels)\; x \; \frac{mm}{pixel}}{Virtual\; Image\; distance\; (mm)}$$

The above equation is based on the small angle approximation, which, for a small angle $\theta$, $\tan \theta = \theta$, so that the double image separation distance ($D_1$) divided by the virtual image distance in mm is equal to the separation angle in radians. The ratio of mm/pixel may be determined by calculation from a calibration image. Next, with the windshield 320 and HUD projection system 316 positioned according to the standard installation conditions of the windshield, the height of the driver, H, is adjusted in order to measure the upper or lower eyebox reflected double image separation distance. When measuring the upper eyebox reflected double image separation distance, the centerline of the camera lens is moved to a height, H, of 182.4 mm and the lower eyebox reflected double image separation distance is measured with the centerline of the camera lens positioned at a driver height, H, of 126.2 mm. Once the camera is positioned, the driver distance, D, and look down angle, $\Phi$, can be calculated. Then the reflected double image separation distance can be determined for each height.

As discussed above, windshields configured according to embodiments of the present invention can have at least one of an upper eyebox reflected double image separation distance of less than about 0.58 mrad (2 arc-min) and a lower eyebox reflected double image separation distance of less than about 0.58 mrad (2 arc-min) when measured at standard installation conditions for that windshield. This is an improvement over conventional windshields, which tend to minimize double image separation distance only for a single driver height, but produce significant ghosting for taller or shorter drivers.

Although described herein with respect to windshields for automobiles, it should be understood that multiple layer panels including interlayers as described herein may be used for a variety of applications, including as aircraft windshields and windows, as well as windshields and panels for other transportation applications, including marine applications, rail applications, motorcycle applications, and other recreational motor vehicles.

The following example is intended to be illustrative of the present invention in order to teach one of ordinary skill in the art to make and use the invention and is not intended to unnecessarily limit the scope of the invention in any way.

## EXAMPLE

Several windshields, W-1 through W-4, were prepared by laminating an acoustic tri-layer PVB interlayer between two sheets of 2.3 mm-thick glass. Each interlayer had a HUD region that included a tapered thickness profile. One of the interlayers, used to form windshield W-1, had a constant angle zone with a wedge angle of 0.7 mrad, and the other three interlayers, used to form windshields W-2 through W-4, had variable angle zones. Each of the interlayers used to form windshields W-2 through W-4 had profiles based on a single target profile, but the actual profile of each interlayer used to form these windshields varied from the target profile by a different amount.

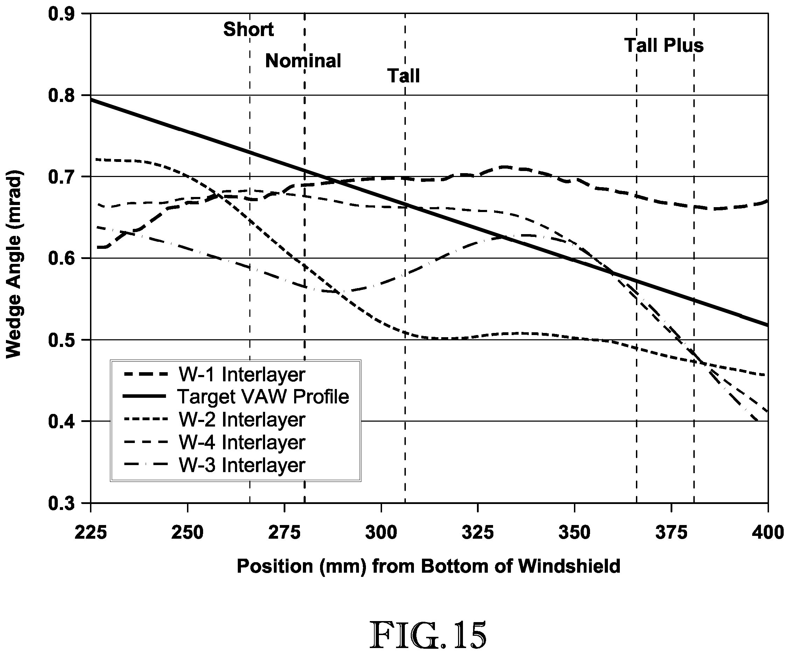

Once formed, the vertical thickness profiles of the HUD regions of each of windshields W-1 through W-4 were measured using a Lumetrics™ Optigauge, which utilizes interferometry to calculate the layer thickness. Thickness measurements were taken at every 0.1 cm along the height of the HUD region for each windshield, and thickness profile data was collected. From the thickness profiles, the wedge angle profile of each windshield's HUD region was also calculated. This was done by first smoothing the collected thickness data using a Savitzky-Golay filter over a 76.2 mm (3-inch) wide segment using a first order polynomial fit to increase the signal-to-noise ratio, and then by calculating the first derivative of the thickness profile line within the HUD region. The resulting wedge angle data as a function of position was assembled to form wedge angle profiles for each interlayer. The measured wedge angle profiles for the HUD region of the interlayers of each of windshields W-1 through W-4 are provided in FIG. 15.

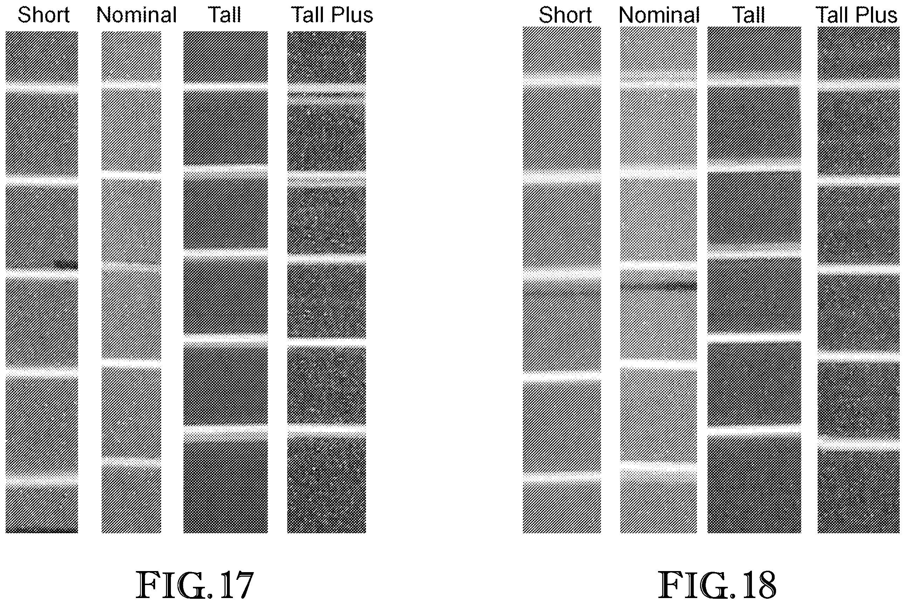

Thereafter, the double image separation distance was measured for each of windshields W-1 through W-4 at several driver heights according to the procedure described previously. For each windshield, the double image separation distance for a "short" driver (H = 126.2 mm), a "nominal" driver (H = 134.4 mm), a "tall" driver (H = 148.8 mm), and a "tall plus" driver (H = 182.4 mm) were measured at standard installation conditions. Excerpts of the resulting captured images, taken near the center of each image, as shown in FIG. 16, for each of windshields W-1 through W-4 are provided in FIGS. 17 through 20, respectively.

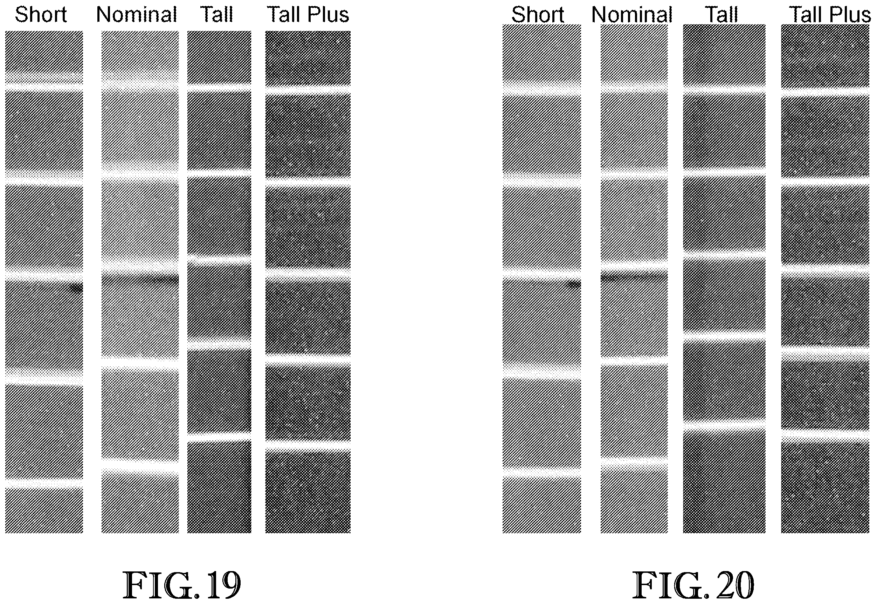

As shown by a comparison of FIG. 17 with FIGS. 18 through 20, the interlayers that include a HUD region having at least one variable angle zone (W-2 through W-4) exhibit lower double image separation than interlayers including a HUD region having a constant angle zone (W-1). Additionally, as shown by a comparison of FIGS. 18, 19, and 20, windshield W-4 (FIG. 20), which was produced with an interlayer having a wedge angle profile that deviated the least amount from the target profile, provided the highest quality images at all driver locations, including short, nominal, tall, and tall plus. Table 1, below, provides a qualitative analysis of the images provided in FIGS. 17 through 20.

**Table 1: Qualitative Analysis of Double Image Separation for Several Windshields at Various Driver Heights**

| Driver Position | Short | | Nominal | | Tall | | Tall Plus | |
|---|---|---|---|---|---|---|---|---|
| Windshield | Image Quality | Θ Deviation from Target | Image Quality | Θ Deviation from Target | Image Quality | Θ Deviation from Target | Image Quality | Θ Deviation from Target |
| | | >\|0.10\| mrad | | >\|0.10\| mrad | | >\|0.10\| mrad | | >\|0.10\| mrad |
| W-1 | OK | | OK | | OK | | Not OK | X |
| W-2 | OK | | OK | X | Not OK | X | OK | |
| W-3 | Not OK | X | Not OK | X | OK | | OK | |
| W-4 | OK | | OK | | OK | | OK | |

While the invention has been disclosed in conjunction with a description of certain embodiments, including those that are currently believed to be the preferred embodiments, the detailed description is intended to be illustrative and should not be understood to limit the scope of the present disclosure.

**Claims**

1. A windshield comprising -

a pair of glazing panels; and
a polymeric interlayer disposed between and in contact with each of the glazing panels, wherein said polymeric interlayer defines a HUD region, and wherein said HUD region has a tapered vertical thickness profile including at least one variable angle zone,
wherein said windshield exhibits at least one of an upper eyebox reflected double image separation distance of less than 0.58 mrad (2 arc-min) and a lower eyebox reflected double image separation distance of less than 0.58 mrad (2 arc-min) when measured as installed in the vehicle,
wherein the upper eyebox reflected double image separation distance refers to the double image separation distance determined with a camera which camera lens centerline is positioned at a height of 182.4 mm from a line drawn horizontally from the lower most point on the interior of the windshield as installed in the vehicle, wherein the lower eyebox reflected double image separation distance refers to the double image separation distance determined with a camera which camera lens centerline is positioned at a height of 126.2 mm from a line drawn horizontally from the lower most point on the interior of the windshield as installed in the vehicle.

2. The windshield of claim 1, wherein said windshield exhibits both an upper eyebox reflected double image separation distance of less than 0.58 mrad (2 arc-min) and a lower eyebox reflected double image separation distance of less than 2 arc-min, when measured as installed in the vehicle.

3. The windshield of claim 1, wherein said windshield exhibits at least one of an upper eyebox reflected double image separation distance of less than 1 arc-min and a lower eyebox reflected double image separation distance of less than 1 arc-min, when measured as installed in the vehicle.

4. The windshield of claim 1, wherein said HUD region has a vertical wedge angle profile that increases over at least a portion of said HUD region.

5. The windshield of claim 1, wherein said HUD region has a vertical wedge angle profile that decreases over at least a portion of said HUD region.

6. The windshield of claim 1, wherein said HUD region has a vertical wedge angle profile that remains constant over at least a portion of said HUD region.

7. The windshield of claim 1, wherein said tapered vertical thickness profile includes at least two variable angle zones.

8. The windshield of claim 1, wherein said tapered vertical thickness profile does not include a constant angle zone.

9. The windshield of claim 1, wherein said HUD region has a flat horizontal thickness profile.

10. The windshield of claim 1, wherein said interlayer and said panels each include an upper installed edge, a lower installed edge, a driver side installed edge, and a passenger side installed edge, wherein said upper and said lower side installed edges of said interlayer are vertically spaced from and parallel to each other when said windshield is in an installed position, and wherein said driver side installed edge and said passenger side installed edge of said interlayer are each in contact with said upper installed edge and said lower installed edge of said interlayer and are horizontally spaced from and parallel to one another when said windshield is in an installed position, wherein said HUD region is positioned closer to said lower installed edge of said interlayer than to said upper installed edge of said interlayer.

11. The windshield of claim 10, wherein said HUD region is defined by an upper installed HUD boundary spaced apart from and parallel to said upper installed edge of said interlayer and a lower installed HUD boundary spaced apart from and parallel to said lower installed edge of said interlayer, wherein said upper HUD boundary and said lower HUD boundary extend at least 40 percent of the distance between said driver side installed edge and said passenger side installed edge of said windshield.

12. A method of producing the windshield according to claim 1, said method comprising:

    (a) obtaining a prescribed vertical wedge angle profile for a HUD region of a target interlayer;
    (b) forming an interlayer to provide a formed interlayer, wherein said formed interlayer defines a HUD region, and wherein said forming is carried out such that at least 50 percent of said HUD region of said formed interlayer has a vertical wedge angle profile that varies from said prescribed vertical wedge angle profile for said HUD region of said target interlayer by no more than 0.10 mrad, wherein the wedge angle profile is determined by using the Savitzky-Golay method over a 76.2 mm (3-inch) segment using a first order polynominal fit as described in the description; and
    (c) laminating said formed interlayer between a pair of glazing panels to form said windshield.

13. The method of claim 12, wherein said forming is carried out such that at least 50 percent of said HUD region of said formed interlayer has a vertical wedge angle profile that varies from said prescribed vertical wedge angle profile for said HUD region of said target interlayer by no more than 0.075 mrad.

14. A vehicle comprising the windshield of any one of claims 1 to 11.

**15.** The vehicle of claim 14, further comprising a head-up-display system.

**Patentansprüche**

**1.** Windschutzscheibe, aufweisend -

ein Paar Verglasungsplatten und
eine polymere Zwischenschicht, die zwischen den Verglasungsscheiben angeordnet ist und mit jeder von ihnen in Kontakt steht, wobei die polymere Zwischenschicht einen HUD-Bereich definiert und wobei der HUD-Bereich ein sich verjüngendes vertikales Dickenprofil mit mindestens einer Zone mit variablem Winkel aufweist,
wobei die Windschutzscheibe mindestens einen der folgenden Werte aufweist: einen oberen Eyebox-reflektierten Doppelbild-Trennungsabstand von weniger als 0,58 mrad (2 Bogenminuten) und einen unteren Eyebox-reflektierten Doppelbild-Trennungsabstand von weniger als 0,58 mrad (2 Bogenminuten), gemessen im eingebauten Zustand im Fahrzeug.
wobei der obere Eyebox-reflektierte Doppelbild-Trennungsabstand sich auf den Doppelbild-Trennungsabstand bezieht, der mit einer Kamera bestimmt wird, deren Objektivmittellinie sich in einer Höhe von 182,4 mm von einer horizontal verlaufenden Linie befindet, die vom untersten Punkt auf der Innenseite der im Fahrzeug eingebauten Windschutzscheibe gezogen wird.
wobei sich der Abstand der doppelten Bildtrennung im unteren Augenfeld auf den Abstand der doppelten Bildtrennung bezieht, der mit einer Kamera bestimmt wird, deren Objektivmittellinie sich in einer Höhe von 126,2 mm von einer horizontal verlaufenden Linie befindet, die vom untersten Punkt der Innenseite der im Fahrzeug eingebauten Windschutzscheibe ausgeht.

**2.** Windschutzscheibe nach Anspruch 1, wobei die Windschutzscheibe sowohl einen oberen Eyebox-reflektierten Doppelbild-Trennungsabstand von weniger als 0,58 mrad (2 Bogenminuten) als auch einen unteren Eyebox-reflektierten Doppelbild-Trennungsabstand von weniger als 2 Bogenminuten aufweist, gemessen im eingebauten Zustand im Fahrzeug.

**3.** Windschutzscheibe nach Anspruch 1, wobei die Windschutzscheibe sowohl einen oberen Eyebox-reflektierten Doppelbild-Trennungsabstand von weniger als 1 Bogenminute als auch einen unteren Eyebox-reflektierten Doppelbild-Trennungsabstand von weniger als 1 Bogenminute aufweist, gemessen im eingebauten Zustand im Fahrzeug.

**4.** Windschutzscheibe nach Anspruch 1, wobei der HUD-Bereich ein vertikales Keilwinkelprofil aufweist, das über mindestens einen Teil des HUD-Bereichs zunimmt.

**5.** Windschutzscheibe nach Anspruch 1, wobei der HUD-Bereich ein vertikales Keilwinkelprofil aufweist, das über mindestens einen Teil des HUD-Bereichs zunimmt.

**6.** Windschutzscheibe nach Anspruch 1, wobei der HUD-Bereich ein vertikales Keilwinkelprofil aufweist, das über mindestens einen Teil des HUD-Bereichs konstant bleibt.

**7.** Windschutzscheibe nach Anspruch 1, wobei das sich verjüngende vertikale Dickenprofil mindestens zwei Zonen mit variablem Winkel umfasst.

**8.** Windschutzscheibe nach Anspruch 1, wobei das sich verjüngende vertikale Dickenprofil keine Zone mit konstantem Winkel aufweist.

**9.** Windschutzscheibe nach Anspruch 1, wobei der HUD-Bereich ein flaches horizontales Dickenprofil aufweist.

**10.** Windschutzscheibe nach Anspruch 1, wobei die Zwischenschicht und die Platten jeweils eine obere Einbaukante, eine untere Einbaukante, eine fahrerseitige Einbaukante und eine beifahrerseitige Einbaukante aufweisen, wobei die obere und die untere Einbaukante der Zwischenschicht vertikal voneinander beabstandet und parallel zueinander sind, wenn sich die Windschutzscheibe in einer Einbauposition befindet, und wobei die fahrerseitige Einbaukante und die beifahrerseitige Einbaukante der Zwischenschicht jeweils mit der oberen Einbaukante und der unteren Einbaukante der Zwischenschicht in Kontakt stehen und horizontal voneinander beabstandet und parallel zueinander sind, wenn sich die Windschutzscheibe in einer Einbauposition befindet, wobei der HUD-Bereich näher an der unteren Einbaukante der Zwischenschicht als an der oberen Einbaukante der Zwischenschicht positioniert ist.

11. Windschutzscheibe nach Anspruch 10, wobei der HUD-Bereich durch eine obere HUD-Grenze, die von der oberen Einbaukante der Zwischenschicht beabstandet und parallel zu dieser verläuft, und eine untere HUD-Grenze, die von der unteren Einbaukante der Zwischenschicht beabstandet und parallel zu dieser verläuft, definiert ist, wobei sich die obere HUD-Grenze und die untere HUD-Grenze über mindestens 40 Prozent der Entfernung zwischen der auf der Fahrerseite eingebauten Kante und der auf der Beifahrerseite eingebauten Kante der Windschutzscheibe erstrecken.

12. Verfahren zur Herstellung der Windschutzscheibe gemäß Anspruch 1, wobei das Verfahren aufweist:

(a) Erhalten eines vorgeschriebenen vertikalen Keilwinkelprofils für einen HUD-Bereich einer Zielzwischenschicht,
(b) Bilden einer Zwischenschicht, um eine geformte Zwischenschicht bereitzustellen, wobei die geformte Zwischenschicht einen HUD-Bereich definiert und wobei das Bilden so durchgeführt wird, dass mindestens 50 Prozent des HUD-Bereichs der geformten Zwischenschicht ein vertikales Keilwinkelprofil aufweisen, das von dem vorgeschriebenen vertikalen Keilwinkelprofil für den HUD-Bereich der Zielzwischenschicht um nicht mehr als 0,10 mrad abweicht, wobei das Keilwinkelprofil unter Verwendung der Savitzky-Golay-Methode über ein 76,2 mm (3 Zoll) langes Segment unter Verwendung einer Polynom-Anpassung erster Ordnung, wie in der Beschreibung beschrieben, bestimmt wird und
(c) Laminieren der gebildeten Zwischenschicht zwischen einem Paar Verglasungsscheiben, um die Windschutzscheibe zu bilden.

13. Verfahren nach Anspruch 12, wobei das Formen so durchgeführt wird, dass mindestens 50 Prozent des HUD-Bereichs der geformten Zwischenschicht ein vertikales Keilwinkelprofil aufweisen, das um nicht mehr als 0,075 mrad von dem vorgeschriebenen vertikalen Keilwinkelprofil für den HUD-Bereich der Zielzwischenschicht abweicht.

14. Fahrzeug, das die Windschutzscheibe gemäß einem der Ansprüche 1 bis 11 umfasst.

15. Fahrzeug nach Anspruch 14, das ferner ein Head-up-Display-System umfasst.

**Revendications**

1. Pare-brise comprenant :

une paire de panneaux de vitrage ; et
un intercalaire polymère disposé entre et en contact avec chacun des panneaux de vitrage, dans lequel ledit intercalaire polymère définit une région d'affichage tête haute dite HUD, et dans lequel ladite région de HUD a un profil d'épaisseur vertical à section décroissante comprenant au moins une zone à angle variable,
dans lequel ledit pare-brise présente au moins un élément parmi une distance de séparation de double image réfléchie de boîte oculaire supérieure de moins de 0,58 mrad (2 minutes d'arc) et une distance de séparation de double image réfléchie de boîte oculaire inférieure de moins de 0,58 mrad (2 minutes d'arc) lors de mesures réalisées dans les conditions d'installation dans le véhicule,
dans lequel la distance de séparation de double image réfléchie de boîte oculaire supérieure fait référence à la distance de séparation de double image déterminée avec un appareil photographique dont la ligne centrale de l'objectif est positionnée à une hauteur de 182,4 mm à partir d'une ligne tracée horizontalement à partir du point le plus bas à l'intérieur du pare-brise tel qu'installé dans le véhicule,
dans lequel la distance de séparation de double image réfléchie de boîte oculaire inférieure fait référence à la distance de séparation de double image déterminée avec un appareil photographique dont la ligne centrale de l'objectif est positionnée à une hauteur de 126,2 mm à partir d'une ligne tracée horizontalement à partir du point le plus bas à l'intérieur du pare-brise tel qu'installé dans le véhicule.

2. Pare-brise selon la revendication 1, dans lequel ledit pare-brise présente à la fois une distance de séparation de double image réfléchie de boîte oculaire supérieure de moins de 0,58 mrad (2 minutes d'arc) et une distance de séparation de double image réfléchie de boîte oculaire inférieure de moins de 2 minutes d'arc, lors de mesures réalisées dans les conditions d'installation dans le véhicule.

3. Pare-brise selon la revendication 1, dans lequel ledit pare-brise présente au moins un élément parmi une distance de séparation de double image réfléchie de boîte oculaire supérieure de moins de 1 minute d'arc et une distance de séparation de double image réfléchie de boîte oculaire inférieure de moins de 1 minute d'arc, lors de mesures réalisées dans les conditions d'installation dans le véhicule.

4. Pare-brise selon la revendication 1, dans lequel ladite région de HUD a un profil d'angle de coin vertical qui augmente sur au moins une partie de ladite région de HUD.

5. Pare-brise selon la revendication 1, dans lequel ladite région de HUD a un profil d'angle de coin vertical qui diminue sur au moins une partie de ladite région de HUD.

6. Pare-brise selon la revendication 1, dans lequel ladite région de HUD a un profil d'angle de coin vertical qui reste constant sur au moins une partie de ladite région de HUD.

7. Pare-brise selon la revendication 1, dans lequel ledit profil d'épaisseur vertical à section décroissante comprend au moins deux zones à angle variable.

8. Pare-brise selon la revendication 1, dans lequel ledit profil d'épaisseur vertical à section décroissante ne comprend pas de zone à angle constant.

9. Pare-brise selon la revendication 1, dans lequel ladite région de HUD a un profil d'épaisseur horizontal plat.

10. Pare-brise selon la revendication 1, dans lequel ledit intercalaire et lesdits panneaux comprennent chacun un bord installé supérieur, un bord installé inférieur, un bord installé côté conducteur et un bord installé côté passager, dans lequel lesdits bords installés côté supérieur et inférieur dudit intercalaire sont verticalement espacés l'un de l'autre et parallèles l'un à l'autre lorsque ledit pare-brise est dans une position installée, et dans lequel ledit bord installé côté conducteur et ledit bord installé côté passager dudit intercalaire sont chacun en contact avec ledit bord installé supérieur et ledit bord installé inférieur dudit intercalaire et sont horizontalement espacés l'un de l'autre et parallèles l'un à l'autre lorsque ledit pare-brise est dans une position installée, dans lequel ladite région de HUD est positionnée plus près dudit bord installé inférieur dudit intercalaire que dudit bord installé supérieur dudit intercalaire.

11. Pare-brise selon la revendication 10, dans lequel ladite région de HUD est définie par une limite de HUD installée supérieure qui est espacée dudit bord installé supérieur dudit intercalaire et parallèle à celui-ci et une limite de HUD installée inférieure qui est espacée dudit bord installé inférieur dudit intercalaire et parallèle à celui-ci, dans lequel ladite limite de HUD supérieure et ladite limite de HUD inférieure s'étendent sur au moins 40 pour cent de la distance entre ledit bord installé côté conducteur et ledit bord installé côté passager dudit pare-brise.

12. Procédé de production du pare-brise selon la revendication 1, ledit procédé comprenant :

(a) l'obtention d'un profil d'angle de coin vertical prescrit pour une région de HUD d'un intercalaire cible ;
(b) la formation d'un intercalaire pour fournir un intercalaire formé, dans lequel ledit intercalaire formé définit une région de HUD, et dans lequel ladite formation est réalisée de sorte qu'au moins 50 pour cent de ladite région de HUD dudit intercalaire formé a un profil d'angle de coin vertical qui varie dudit profil d'angle de coin vertical prescrit pour ladite région de HUD dudit intercalaire cible d'une valeur inférieure ou égale à 0,10 mrad, dans lequel le profil d'angle de coin est déterminé en utilisant la méthode de Savitzky-Golay sur un segment de 76,2 mm (3 pouces) en utilisant un ajustement polynomial de premier ordre comme décrit dans la description ; et
(c) le laminage dudit intercalaire formé entre une paire de panneaux de vitrage pour former ledit pare-brise.

13. Procédé selon la revendication 12, dans lequel ladite formation est réalisée de sorte qu'au moins 50 pour cent de ladite région de HUD dudit intercalaire formé a un profil d'angle de coin vertical qui varie dudit profil d'angle de coin vertical prescrit pour ladite région de HUD dudit intercalaire cible d'une valeur inférieure ou égale à 0,075 mrad.

14. Véhicule comprenant le pare-brise selon l'une quelconque des revendications 1 à 11.

15. Véhicule selon la revendication 14, comprenant en outre un système d'affichage tête haute.

**FIG.1**

EP 3 439 872 B1

FIG. 2a

FIG. 2b

FIG.3

Wedge Angle

Lower HUD
Boundary

HUD Zone Position

Upper HUD
Boundary

FIG. 4

EP 3 439 872 B1

FIG.5

FIG.6

EP 3 439 872 B1

FIG.7

FIG.8

FIG.9

FIG.10

**FIG. 11a**

**FIG. 11b**

Short Eyebox

Nominal Eyebox

Tall Eyebox

**FIG. 12a**

Short, Nominal, and Tall Eyebox

**FIG. 12b**

EP 3 439 872 B1

# FIG.13a

EP 3 439 872 B1

FIG. 13b

FIG. 14

FIG. 16

EP 3 439 872 B1

FIG.15

FIG.18

FIG.17

FIG.20

FIG.19

**REFERENCES CITED IN THE DESCRIPTION**

**Patent documents cited in the description**

- WO 2009071135 A
- DE 102007059323
- WO 2015086234 A
- US 14563011 B
- US 20160159041 A1
- US 6797396 B
- WO 8801230 A
- US 4799745 A
- US 4017661 A
- US 4786783 A